# FASCICULE DE BREVET EUROPEEN

(11) **EP 4 107 233 B1**
(45) Date de publication et mention de la délivrance du brevet: **08.04.2026**
(21) Numéro de dépôt: 21705191.1
(22) Date de dépôt: 15.02.2021
(51) Int. Cl.: C10G 1/10, C10G 1/00, C10G 45/00, C10G 45/38, C10G 65/06, C10G 9/36, C10G 69/06

(54) **PROCEDE OPTIMISE DE TRAITEMENT D'HUILES DE PYROLYSE DE PLASTIQUES EN VUE DE LEUR VALORISATION**
OPTIMIERTES VERFAHREN ZUR VERARBEITUNG VON PYROLYSEÖLEN AUS KUNSTSTOFFEN ZUR VERBESSERUNG IHRER VERWENDUNG
OPTIMIZED METHOD FOR PROCESSING PLASTIC PYROLYSIS OILS FOR IMPROVING THEIR USE

(30) Priorité: 21.02.2020 FR 2001758
(43) Date de publication de la demande: 28.12.2022
(73) Titulaire: IFP Energies nouvelles, 92500 Rueil-Malmaison (FR)
(72) Inventeur: WEISS, Wilfried, 92852 RUEIL-MALMAISON CEDEX (FR); BONNARDOT, Jerome, 92500 RUEIL-MALMAISON (FR)
(74) Mandataire: IFP Energies nouvelles
(86) Numéro de dépôt international: PCT/EP2021/053587
(87) Numéro de publication internationale: WO 2021/165178

(56) Documents cités:
- WO-A1-2014/001632
- WO-A1-2016/142809
- FR-A1- 3 012 467
- US-A- 3 492 220
- US-A1- 2011 139 680
- US-A1- 2016 264 885
- US-A1- 2017 355 914

## Description

### DOMAINE TECHNIQUE

La présente invention concerne un procédé de traitement d'une huile de pyrolyse de plastiques afin d'obtenir un effluent hydrocarboné qui peut être valorisé par exemple en étant au moins en partie directement intégré à un pool naphta ou diesel ou comme charge d'une unité de vapocraquage. Plus particulièrement, la présente invention concerne un procédé de traitement d'une charge issue de la pyrolyse des déchets plastiques, afin d'éliminer au moins en partie des impuretés, notamment les oléfines (mono-, di- oléfines), les métaux, en particulier le silicium, et les halogènes, en particulier le chlore, que ladite charge peut contenir en quantités relativement importantes, et de manière à hydrogéner la charge pour pouvoir la valoriser.

Le procédé selon l'invention permet donc de traiter les huiles de pyrolyse de plastiques pour obtenir un effluent qui peut être injecté, en tout ou partie, dans une unité de vapocraquage. Le procédé selon l'invention permet ainsi de valoriser les huiles de pyrolyse de plastiques, tout en en réduisant la formation de coke et ainsi les risques de bouchage et/ou de pertes prématurées d'activité du/des catalyseurs utilisés dans l'unité de vapocraquage, et en diminuant les risques de corrosion

### TECHNIQUE ANTERIEURE

Les plastiques issus des filières de collecte et de tri peuvent subir une étape de pyrolyse afin d'obtenir entre autres des huiles de pyrolyse. Ces huiles de pyrolyse de plastiques sont généralement brûlées pour générer de l'électricité et/ou utilisées en tant que combustible dans des chaudières industrielles ou de chauffage urbain.

Une autre voie de valorisation des huiles de pyrolyse de plastiques pourrait être l'utilisation de ces huiles de pyrolyse de plastiques en tant que charge d'une unité de vapocraquage afin de (re)créer des oléfines, ces dernières étant des monomères constitutifs de certains polymères. Cependant, les déchets plastiques sont généralement des mélanges de plusieurs polymères, par exemple des mélanges de polyéthylène, de polypropylène, de polyéthylène téréphtalate, de polychlorure de vinyle, de polystyrène. De plus, en fonction des usages, les plastiques peuvent contenir, en plus des polymères, d'autres composés, comme des plastifiants, des pigments, des colorants ou encore des résidus de catalyseurs de polymérisation. Les déchets plastiques peuvent en outre contenir, de manière minoritaire, de la biomasse provenant par exemple des ordures ménagères. Il en résulte que les huiles issues de la pyrolyse des déchets plastiques comprennent beaucoup d'impuretés, en particulier des dioléfines, des métaux, notamment le silicium, ou encore des composés halogénés, notamment des composés à base de chlore, des hétéroéléments comme du soufre, de l'oxygène et de l'azote, des insolubles, à des teneurs souvent élevées et incompatibles avec les unités de vapocraquage ou les unités situées en aval des unités de vapocraquage, notamment les procédés de polymérisation et les procédés d'hydrogénation sélective. Ces impuretés peuvent générer des problèmes d'opérabilité et notamment des problèmes de corrosion, de cokage ou de désactivation catalytique, ou encore des problèmes d'incompatibilité dans les usages des polymères cibles. La présence de dioléfines peut également conduire à des problèmes d'instabilité de l'huile de pyrolyse se caractérisant par la formation de gommes. Ce phénomène est généralement limité par un stockage approprié de la charge. Les gommes et les insolubles éventuellement présents dans l'huile de pyrolyse peuvent générer des problèmes de colmatage dans les procédés.

De plus, lors de l'étape de vapocraquage, les rendements en oléfines légères recherchées pour la pétrochimie, notamment l'éthylène et le propylène, dépendent fortement de la qualité des charges envoyées au vapocraquage. Le BMCI (Bureau of Mines Correlation Index) est souvent utilisé pour caractériser les coupes hydrocarbonées. Globalement, les rendements en oléfines légères augmentent quand la teneur en paraffines augmente et/ou quand le BMCI diminue. A l'inverse, les rendements en composés lourds non recherchés et/ou en coke augmentent quand le BMCI augmente.

Le document WO 2018/055555 propose un procédé de recyclage des déchets plastiques global, très général et relativement complexe, allant de l'étape même de pyrolyse des déchets plastiques jusqu'à l'étape de vapocraquage. Le procédé de la demande WO 2018/055555 comprend, entre autres, une étape d'hydrotraitement de la phase liquide issue directement de la pyrolyse, de préférence dans des conditions assez poussées notamment en terme de température, par exemple à une température comprise entre 260 et 300°C, une étape de séparation de l'effluent d'hydrotraitement puis une étape d'hydrodélakylation de l'effluent lourd séparé à une température de préférence élevée, par exemple comprise entre 260 et 400°C.

Le document WO 2014/001632 divulgue un procédé de traitement de biomasse pouvant contenir des polymères comprenant une étape de préhydrogénation en 2 étapes; une étape d'hydroprocessing incluant des réactions d'hydroisomérisation, d'hydrotraitement, d'hydrodéaromatisation et/ou d'hydrocraquage; une étape de séparation en une phase gazeuse, une phase aqueuse et un effluent hydrocarboné, et; une étape de fractionnement pour obtenir des fractions de type diesel, gazoline. Les documents US 2016/264885 A1, WO 2016/142809 A1 et US 3 492 220 A décrivent également un procédé selon l'état de la technique.

La présente invention vise à pallier ces inconvénients et participer au recyclage des plastiques, en proposant un procédé de traitement d'une huile issue de la pyrolyse de plastiques pour la purifier et l'hydrotraiter afin d'obtenir un effluent hydrocarboné à teneur réduite en impuretés et donc valorisable, soit directement sous forme de coupe naphta et/ou de coupe diesel, soit présentant une composition compatible avec une charge d'une unité de vapocraquage et permettant d'obtenir des rendements améliorés en oléfines légères lors de l'étape de vapocraquage, tout en réduisant en particulier les risques de bouchage lors d'étapes de traitement d'huiles de pyrolyse des plastiques, comme celles décrites dans l'art antérieur, et la formation de coke en quantités importantes et/ou les risques de corrosion rencontrés lors d'étape(s) ultérieure(s), par exemple lors d'étape de vapocraquage des huiles de pyrolyse des plastiques.

### RESUME DE L'INVENTION

L'invention concerne un procédé de traitement d'une charge comprenant une huile de pyrolyse de plastiques, tel que défini dans les revendications.

Un avantage du procédé selon l'invention est de purifier une huile issue de la pyrolyse de déchets plastiques d'au moins une partie de ses impuretés ce qui permet de l'hydrogéner et ainsi de pour pouvoir la valoriser en particulier en l'incorporant directement à un pool carburant ou encore en la rendant compatible à un traitement dans une unité de vapocraquage afin de pouvoir obtenir en particulier des oléfines légères avec des rendements accrus qui pourront servir de monomères dans la fabrication de polymères.

Un autre avantage de l'invention est de prévenir des risques de bouchage et/ou de corrosion de l'unité de traitement dans laquelle le procédé de l'invention est mis en oeuvre, les risques étant exacerbés par la présence, souvent en quantités importantes, de dioléfines, de métaux et de composés halogénés dans l'huile de pyrolyse de plastiques.

Le procédé de l'invention permet ainsi d'obtenir un effluent hydrocarboné issu d'une huile de pyrolyse de plastiques débarrassé au moins en partie des impuretés de l'huile de pyrolyse de plastiques de départ, limitant ainsi les problèmes d'opérabilité, comme les problèmes de corrosion, de cokage ou de désactivation catalytique, que peuvent engendrer ces impuretés, en particulier dans les unités vapocraquage et/ou dans les unités situées en aval des unités de vapocraquage, notamment les unités de polymérisation et d'hydrogénation sélective. L'élimination d'au moins une partie des impuretés des huiles issues de la pyrolyse des déchets plastiques permettra aussi d'augmenter la gamme des applications des polymères cibles, les incompatibilités d'usages étant réduites.

L'invention a comme avantage encore de participer au recyclage des plastiques et à la préservation des ressources fossiles, en permettant la valorisation des huiles issues de leur pyrolyse. Elle permet, en effet, la purification et l'hydrotraitement de ces huiles qui peuvent alors être introduites dans un vapocraqueur pour obtenir des oléfines et ainsi de re-fabriquer des polymères. Le procédé permet aussi d'obtenir des coupes naphtha et/ou diesel à partir de charge comprenant des huiles de pyrolyse de plastiques, coupes que le raffineur pourrait directement intégrer respectivement au pool naphtha et/ou au pool diesel obtenus par raffinage du pétrole brut.

### DESCRIPTION DES MODES DE REALISATION

Selon l'invention, une « huile de pyrolyse de plastiques » est une huile, avantageusement sous forme liquide à température ambiante, issue de la pyrolyse de plastiques, de préférence de déchets plastiques provenant notamment de filières de collecte et de tri. Elle comprend en particulier un mélange de composés hydrocarbonés, notamment des paraffines, des mono- et/ou di-oléfines, des naphtènes et des aromatiques, ces composés hydrocarbonés ayant de préférence un point d'ébullition inférieur à 700°C et de manière préférée inférieur à 550°C. L'huile de pyrolyse de plastiques peut comprendre, et le plus souvent comprend, en outre des impuretés comme des métaux, notamment du silicium et du fer, des composés halogénés, notamment des composés chlorés. Ces impuretés peuvent être présentes dans l'huiles de pyrolyse de plastiques à des teneurs élevées, par exemple jusqu'à 350 ppm poids ou encore 700 ppm poids voire 1000 ppm poids d'éléments halogène apportés par des composés halogénés, jusqu'à 100 ppm poids, voire 200 ppm poids d'éléments métalliques ou semi-métalliques. Les métaux alcalins, les alcalino terreux, les métaux de transition, les métaux pauvres et les métalloïdes peuvent être assimilés aux contaminants de nature métallique, appelés métaux ou éléments métalliques ou semi métalliques. De manière particulière, les métaux ou éléments métalliques ou semi métalliques, éventuellement contenus dans les huiles issues de la pyrolyse des déchets plastiques, comprennent du silicium, du fer ou ces deux éléments. L'huile de pyrolyse de plastiques peut également comprendre d'autres impuretés comme des hétéroéléments apportés notamment par des composés soufrés, des composés oxygénés et/ou des composés azotés, à des teneurs généralement inférieures à 10000 ppm poids d'hétéroéléments et de préférence inférieures à 4000 ppm poids d'hétéroéléments.

Selon la présente invention, les pressions sont des pressions absolues, encore notées abs., et sont données en MPa absolus (ou MPa abs.).

Selon la présente invention, les expressions « compris entre ... et ... » et « entre .... et ... » sont équivalentes et signifient que les valeurs limites de l'intervalle sont incluses dans la gamme de valeurs décrite. Si tel n'était pas le cas et que les valeurs limites n'étaient pas incluses dans la gamme décrite, une telle précision sera apportée par la présente invention. Dans le sens de la présente invention, les différents plages de paramètre pour une étape donnée tels que les plages de pression et les plages température peuvent être utilisés seul ou en combinaison. Par exemple, dans le sens de la présente invention, une plage de valeurs préférées de pression peut être combinée avec une plage de valeurs de température plus préférées.

Dans la suite, des modes de réalisation particuliers et/ou préférés de l'invention peuvent être décrits. Ils pourront être mis en oeuvre séparément ou combinés entre eux, sans limitation de combinaison lorsque c'est techniquement réalisable.

L'invention concerne un procédé de traitement d'une charge comprenant une huile de pyrolyse de plastiques, selon la revendication 1.

### La charge

La charge du procédé selon l'invention comprend au moins une huile de pyrolyse de plastiques. Ladite charge peut être constituée uniquement d'huile(s) de pyrolyse de plastiques. De préférence, ladite charge comprend au moins 50% poids, de manière préférée entre 75 et 100% poids, d'huile de pyrolyse de plastiques, c'est-à-dire de préférence entre 50 et 100% poids, de manière préférée entre 70% et 100% poids de d'huile de pyrolyse de plastiques. La charge du procédé selon l'invention peut comprendre, entre autre une ou des huile(s) de pyrolyse de plastiques, une charge pétrolière conventionnelle ou une charge issue de la conversion de la biomasse qui est alors co-traitée avec l'huile de pyrolyse de plastiques de la charge.

L'huiles de pyrolyse de plastiques de ladite charge comprend des composés hydrocarbonés et des impuretés comme en particulier des mono- et/ou di-oléfines, des métaux, notamment du silicium et du fer, des composés halogénés, notamment des composés chlorés, des hétéroéléments apportés par des composés soufrés, des composés oxygénés et/ou des composés azotés. Ces impuretés sont souvent présentes à des teneurs souvent élevées, par exemple jusqu'à 350 ppm poids ou encore 700 ppm poids voire 1000 ppm poids d'éléments halogène apportés par des composés halogénés, jusqu'à 100 ppm poids, voire 200 ppm poids d'éléments métalliques ou semi-métalliques.

Ladite charge comprenant une huile de pyrolyse de plastiques peut avantageusement être prétraitée dans une étape optionnelle de prétraitement a0), préalablement à l'étape a) d'hydrogénation sélective d'hydrogénation sélective, pour obtenir une charge prétraitée qui alimente l'étape a). Cette étape optionnelle de prétraitement a0) permet de diminuer la quantité de contaminants, en particulier la quantité de silicium, éventuellement présents dans la charge comprenant une huile de pyrolyse de plastiques. Ainsi, une étape optionnelle a0) de prétraitement de la charge comprenant une huile de pyrolyse de plastiques est avantageusement réalisée en particulier lorsque ladite charge comprend plus de 50 ppm poids, notamment plus de 20 ppm poids, plus particulièrement plus de 10 ppm poids, voire plus de 5 ppm poids d'éléments métalliques, et en particulier lorsque ladite charge comprend plus de 20 ppm poids de silicium, plus particulièrement plus de 10 ppm poids, voire plus de 5 ppm poids et encore plus particulièrement plus de 1,0 ppm poids de silicium. Ladite étape optionnelle a0) de prétraitement peut également comprendre une étape de filtration de manière à éliminer d'éventuelles impuretés solides.

Ladite étape optionnelle a0) de prétraitement, est mise en œuvre préalablement à l'étape a) d'hydrogénation sélective, dans une section d'adsorption opérée en présence d'au moins un adsorbant, de préférence ayant une surface spécifique supérieure ou égale à 100 m²/g, et/ou dans une section de séparation solide/liquide, par exemple une section de filtration. Ladite étape optionnelle a0) de prétraitement est alimentée par ladite charge comprenant une huile de pyrolyse de plastiques et est mise en œuvre à une température entre 0 et 150°C, de préférence entre 5 et 100°C, et à une pression entre 0,15 et 10,0 MPa abs, de préférence entre 0,2 et 1,0 MPa abs. De préférence, ladite étape optionnelle a0) de prétraitement met au moins en œuvre une section d'adsorption. La section d'adsorption est opérée avantageusement en présence d'au moins un adsorbant, de préférence de type alumine, ayant une surface spécifique supérieure ou égale à 100 m²/g, de préférence supérieure ou égale à 200 m²/g. La surface spécifique dudit au moins adsorbant est avantageusement inférieure ou égale à 600 m²/g, en particulier inférieure ou égale à 400 m²/g. La surface spécifique de l'adsorbant est une surface mesurée par la méthode BET, c'est-à-dire la surface spécifique déterminée par adsorption d'azote conformément à la norme ASTM D 3663-78 établie à partir de la méthode BRUNAUER-EMMETT-TELLER décrite dans le périodique 'The Journal of the American Chemical Society", 6Q, 309 (1938). Avantageusement, ledit adsorbant comprend moins de 1% poids d'éléments métalliques, de préférence est exempt d'éléments métalliques. Par éléments métalliques de l'adsorbant, il faut entendre les éléments des groupes 6 à 10 du tableau périodique des éléments.

Ladite section d'adsorption de l'étape optionnelle a0) comprend au moins une colonne d'adsorption, de préférence comprend au moins deux colonnes d'adsorption, préférentiellement entre deux et quatre colonnes d'adsorption, contenant ledit adsorbant. Lorsque la section d'adsorption comprend deux colonnes d'adsorption, un mode de fonctionnement peut être un fonctionnement appelé « en swing », selon le terme anglo-saxon consacré, dans lequel l'une des colonnes est en ligne, c'est-à-dire en fonctionnement, tandis que l'autre colonne est en réserve. Lorsque l'absorbant de la colonne en ligne est usé, cette colonne est isolée tandis que la colonne en réserve est mise en ligne, c'est-à-dire en fonctionnement. L'absorbant usé peut être ensuite régénéré *in situ* et/ou remplacé par de l'absorbant frais pour que la colonne le contenant puisse à nouveau être remise en ligne une fois que l'autre colonne aura été isolée.

Un autre mode de fonctionnement est d'avoir au moins deux colonnes fonctionnant en série. Lorsque l'absorbant de la colonne placée en tête est usé, cette première colonne est isolée et l'absorbant usée est soit régénéré *in situ* ou remplacé par de l'absorbant frais. La colonne est ensuite remise en ligne en dernière position et ainsi de suite. Ce fonctionnement est appelé mode permutable, ou selon le terme anglais « PRS » pour Permutable Reactor System ou encore « lead and lag » selon le terme anglo-saxon consacré. L'association d'au moins deux colonnes d'adsorption permet de palier à l'empoisonnement et/ou au colmatage possible et éventuellement rapide de l'adsorbant sous l'action conjointe des contaminants métalliques, des dioléfines, des gommes issues des dioléfines et des insolubles éventuellement présents dans l'huile de pyrolyse de plastiques à traiter. La présence d'au moins deux colonnes d'adsorption facilite en effet le remplacement et/ou la régénération de l'adsorbant, avantageusement sans arrêt de l'unité de prétraitement, voire du procédé, permettant ainsi de diminuer les risques de colmatage et donc d'éviter l'arrêt de l'unité dû au colmatage, de maitriser les coûts et de limiter la consommation d'adsorbant.

Ladite étape optionnelle a0) de prétraitement peut également être éventuellement alimentée par au moins une fraction d'un flux de recycle, avantageusement issu de l'étape e) du procédé, en mélange ou séparément de la charge comprenant une huile de pyrolyse de plastiques.

Ladite étape optionnelle a0) de prétraitement permet ainsi d'obtenir une charge prétraitée qui alimente ensuite l'étape a) d'hydrogénation sélective.

### Etape a) d'hydrogénation sélective

Selon l'invention, le procédé comprend une étape a) d'hydrogénation sélective de la charge comprenant une huile de pyrolyse de plastiques réalisée en présence d'hydrogène, dans des conditions de pression en hydrogène et de température permettant de maintenir ladite charge en phase liquide et avec une quantité d'hydrogène soluble juste nécessaire à une hydrogénation sélective des dioléfines présentes dans l'huile de pyrolyse de plastiques. L'hydrogénation sélective des dioléfines en phase liquide permet ainsi d'éviter ou au moins de limiter la formation de « gommes », c'est-à-dire la polymérisation des dioléfines et donc la formation d'oligomères et polymères, pouvant boucher la section réactionnelle de l'étape b) d'hydrotraitement. Ladite étape a) d'hydrogénation sélective permet d'obtenir un effluent hydrogéné, c'est-à-dire un effluent à teneur réduite en oléfines, en particulier en dioléfines, de préférence exempt de dioléfines.

Selon l'invention, ladite étape a) d'hydrogénation sélective est mise en œuvre dans une section réactionnelle alimentée au moins par ladite charge comprenant une huile de pyrolyse de plastiques, ou par la charge prétraitée issue de l'éventuelle étape a0) de prétraitement, et un flux gazeux comprenant de l'hydrogène (H₂). Eventuellement, la section réactionnelle de ladite étape a) peut également être alimentée en outre par au moins une fraction d'un flux de recycle, avantageusement issu de l'étape e), soit en mélange avec ladite charge, éventuellement prétraitée, soit séparément de la charge, éventuellement prétraitée, avantageusement directement en entrée d'au moins un des réacteurs de la section réactionnelle de l'étape a), soit encore selon les deux modes en mélange et séparément de la charge, éventuellement prétraitée. L'introduction d'au moins une fraction dudit flux de recycle dans la section réactionnelle de l'étape a) d'hydrogénation sélective permet avantageusement de diluer les impuretés de la charge, éventuellement prétraitée, et de contrôler la température notamment dans ladite section réactionnelle.

Ladite section réactionnelle met en oeuvre une hydrogénation sélective, de préférence en lit fixe, en présence d'au moins un catalyseur d'hydrogénation sélective, entre 110 et 200°C, de manière préférée entre 130 et 180°C, une pression partielle d'hydrogène entre 1,0 et 10,0 MPa abs. et à une vitesse volumique horaire (VVH) entre 1,0 et 10,0 h⁻¹. La vitesse volumique horaire (VVH) est définie ici comme le ratio entre le débit volumique horaire de la charge comprenant l'huile de pyrolyse de plastiques, éventuellement prétraitée, par le volume de catalyseur(s). La quantité du flux gazeux comprenant de l'hydrogène (H₂), alimentant ladite section réactionnelle de l'étape a), telle que la couverture en hydrogène est comprise entre 1 et 50 Nm³ d'hydrogène par m³ de charge (Nm³/m³), de manière préférée entre 5 et 20 Nm³ d'hydrogène par m³ de charge (Nm³/m³). La couverture en hydrogène est définie comme le rapport du débit volumique d'hydrogène pris dans les conditions normales de température et pression par rapport au débit volumique de charge « fraîche », c'est-à-dire de la charge à traiter, éventuellement prétraitée, sans tenir compte de l'éventuelle fraction recyclée, à 15°C (en normaux m³ , noté Nm³, de H₂ par m³ de charge). Le flux gazeux comprenant de l'hydrogène, qui alimente la section réactionnelle de l'étape a), peut être constitué d'un appoint en hydrogène et/ou d'hydrogène recyclé issu en particulier de l'étape c) de séparation.

Avantageusement, la section réactionnelle de ladite étape a) comprend entre 1 et 5 réacteurs. Selon un mode de réalisation particulier de l'invention, la section réactionnelle comprend entre 2 et 5 réacteurs, qui fonctionnent en mode permutable, appelé selon le terme anglais « PRS » pour Permutable Reactor System ou encore « lead and lag ». L'association d'au moins deux réacteurs en mode PRS permet d'isoler un réacteur, de décharger le catalyseur usé, de recharger le réacteur en catalyseur frais et remettre en service ledit réacteur sans arrêt du procédé. La technologie PRS est décrite, en particulier, dans le brevet FR2681871.

Avantageusement, des internes de réacteurs, par exemple de type plateaux filtrants, peuvent être utilisés pour prévenir le bouchage du(des) réacteur(s). Un exemple de plateau filtrant est décrit dans le brevet FR3051375.

Avantageusement, ledit au moins catalyseur d'hydrogénation sélective comprend un support, de préférence minéral, et une fonction hydro-déshydrogénante.

La fonction hydro-déshydrogénante comprend en particulier au moins un élément du groupe VIII, de préférence choisi parmi le nickel et le cobalt, et/ou au moins un élément du groupe VIB**,** de préférence choisi parmi le molybdène et le tungstène. La teneur totale en oxydes des éléments métalliques des groupes VIB et VIII (c'est-à-dire la somme des éléments métalliques des groupes VIB et VIII) est de préférence comprise entre 1% et 40% en poids, préférentiellement de 5% à 30% en poids par rapport au poids total du catalyseur. Le rapport pondéral exprimé en oxyde métallique entre le métal (ou les métaux) du groupe VIB par rapport au métal (ou aux métaux) du groupe VIII est de préférence compris entre 1 et 20, et de manière préférée entre 2 et 10. Par exemple, la section réactionnelle de ladite étape a) comprend un catalyseur d'hydrogénation sélective comprenant entre 0,5% et 10% en poids de nickel, de préférence entre 1% et 5% en poids de nickel (exprimé en oxyde de nickel NiO par rapport au poids dudit catalyseur), et entre 1% et 30% en poids de molybdène, de préférence entre 3% et 20% en poids de molybdène (exprimé en oxyde de molybdène MoO₃ par rapport au poids dudit catalyseur) sur un support de préférence minéral.

Le support dudit au moins catalyseur d'hydrogénation sélective est de préférence choisi parmi l'alumine, la silice, les silices-alumines, la magnésie, les argiles et leurs mélanges. Ledit support peut renfermer des composés dopants, notamment des oxydes choisis parmi l'oxyde de bore, en particulier le trioxyde de bore, la zircone, la cérine, l'oxyde de titane, l'anhydride phosphorique et un mélange de ces oxydes. De préférence, ledit au moins catalyseur d'hydrogénation sélective comprend un support d'alumine, de manière préférée dopé avec du phosphore et éventuellement du bore. Lorsque l'anhydride phosphorique P₂O₅ est présent, sa concentration est inférieure à 10% en poids par rapport au poids de l'alumine et avantageusement d'au moins 0,001 % poids par rapport au poids total de l'alumine. Lorsque le trioxyde de bore B₂O₅, est présent, sa concentration est inférieure à 10% en poids par rapport au poids de l'alumine et avantageusement d'au moins 0,001 % par rapport au poids total de l'alumine. L'alumine utilisée peut être par exemple une alumine y (gamma) ou η (êta).

Ledit catalyseur d'hydrogénation sélective est par exemple sous forme d'extrudés.

De manière très préférée, afin d'hydrogéner les dioléfines le plus sélectivement possible, au moins un catalyseur d'hydrogénation sélective utilisé dans l'étape a) comprend moins de 1% en poids de nickel et au moins 0,1 % poids de nickel, de préférence 0,5% poids de nickel, exprimé en oxyde de nickel NiO par rapport au poids dudit catalyseur, et moins de 5% en poids de molybdène et au moins 0,1 % poids de molybdène, de préférence 0,5% poids de molybdène, exprimé en oxyde de molybdène MoO₃ par rapport au poids dudit catalyseur, sur un support d'alumine.

Eventuellement, la charge qui comprend une huile de pyrolyse de plastiques, éventuellement prétraitée, et/ou éventuellement mélangée préalablement avec au moins une fraction d'un flux de recycle avantageusement issu de l'étape e), peut être mélangée avec le flux gazeux comprenant de l'hydrogène préalablement à son introduction dans la section réactionnelle. Ladite charge, éventuellement prétraitée, et/ou éventuellement mélangée avec au moins une fraction du flux de recycle avantageusement issu de l'étape e), et/ou éventuellement en mélange avec le flux gazeux, peut également être chauffée avant son introduction dans la section réactionnelle de l'étape a), par exemple par échange de chaleur notamment avec l'effluent d'hydrotraitement de l'étape b), pour atteindre une température proche de la température mise en oeuvre dans la section réactionnelle qu'elle alimente.

La teneur en impuretés, en particulier en dioléfines, de l'effluent hydrogéné obtenu à l'issue de l'étape a) est réduite par rapport à celle des mêmes impuretés, en particulier des dioléfines, comprises dans la charge du procédé. L'étape a) d'hydrogénation sélective permet de convertir au moins 90% et de préférence au moins 99% des dioléfines contenues dans la charge initiale. L'étape a) permet également l'élimination, au moins en partie, d'autres contaminants, comme par exemple le silicium. L'effluent hydrogéné, obtenu à l'issue de l'étape a) d'hydrogénation sélective, est envoyé, de préférence directement, vers l'étape b) d'hydrotraitement. Lorsqu'au moins une fraction du flux de recycle issu de l'étape e) éventuelle est introduite, l'effluent hydrogéné obtenu à l'issue de l'étape a) d'hydrogénation sélective comprend donc, en plus de la charge convertie, ladite ou lesdites fraction(s) du flux de recycle.

### Etape b) d'hydrotraitement

Selon l'invention, le procédé de traitement comprend une étape b) d'hydrotraitement, en lit fixe, dudit effluent hydrogéné issu de l'étape a), éventuellement en mélange avec au moins une fraction d'un flux de recycle avantageusement issu de l'étape e), en présence d'hydrogène et d'au moins un catalyseur d'hydrotraitement, pour obtenir un effluent d'hydrotraitement.

Avantageusement, l'étape b) met en oeuvre les réactions d'hydrotraitement bien connues de l'homme du métier, et plus particulièrement des réactions d'hydrogénation des oléfines, des aromatiques, d'hydrodémétallation, d'hydrodésulfuration, d'hydrodéazotation, etc.

Ladite étape b) est mise en oeuvre dans une section réactionnelle d'hydrotraitement comprenant au moins un, de préférence entre un et cinq, réacteur(s) à lit fixe ayant n lits catalytiques, n étant un nombre entier supérieur ou égal à un, de préférence compris entre un et dix, de manière préférée compris entre deux et cinq, le(s)dit(s) lit(s) comprenant chacun au moins un, et de préférence pas plus de dix, catalyseur(s) d'hydrotraitement. Lorsqu'un un réacteur comprend plusieurs lits catalytiques, c'est-à-dire au moins deux, de préférence entre deux et dix, de manière préférée entre deux et cinq lits catalytiques, lesdits lits catalytiques sont disposés en série dans ledit réacteur.

Ladite section réactionnelle d'hydrotraitement est alimentée au moins par ledit effluent hydrogéné issu de l'étape a) et un flux gazeux comprenant de l'hydrogène, avantageusement au niveau du premier lit catalytique du premier réacteur en fonctionnement.

Ladite section réactionnelle d'hydrotraitement de l'étape b) peut également être alimentée par au moins une fraction du flux de recycle avantageusement issu de l'étape e) éventuelle. La(les)dite(s) fraction(s) dudit flux de recycle ou la totalité du flux de recycle peu(ven)t être introduite(s) dans ladite section réactionnelle d'hydrotraitement en mélange avec l'effluent hydrogéné issu de l'étape a), séparément dudit effluent hydrogéné issu de l'étape a) ou selon les deux modes en mélange et séparément dudit effluent hydrogéné. La(les)dite(s) fraction(s) dudit flux de recycle ou la totalité du flux de recycle peu(ven)t être introduite(s) dans ladite section réactionnelle d'hydrotraitement au niveau d'un ou de plusieurs lits catalytiques de ladite section réactionnelle d'hydrotraitement de l'étape b). L'introduction d'au moins une fraction dudit flux de recycle permet avantageusement de diluer les impuretés encore présentes dans l'effluent hydrogéné et de contrôler la température, en particulier de limiter l'augmentation de température, dans le ou les lit(s) catalytique(s) de la section réactionnelle d'hydrotraitement qui met en oeuvre des réactions fortement exothermiques. Avantageusement, en fin d'étape b) d'hydrotraitement, la totalité du flux de recycle issu avantageusement de l'étape e) éventuelle, est réintroduite dans le procédé selon la présente invention, en une seule injection ou en plusieurs injections par fractions injectées aux différentes étapes a) et/ou b), et/ou éventuellement a0), du procédé.

Avantageusement, ladite section réactionnelle d'hydrotraitement est mise en oeuvre à une pression équivalente à celle utilisée dans la section réactionnelle de l'étape a) d'hydrogénation sélective, mais à une plus haute température que celle de la section réactionnelle de l'étape a) d'hydrogénation sélective. Ainsi, ladite section réactionnelle d'hydrotraitement est mise en oeuvre à une température d'hydrotraitement entre 250 et 430°C, de préférence entre 280 et 380°C, à une pression partielle d'hydrogène entre 1,0 et 10,0 MPa abs. et à une vitesse volumique horaire (VVH) entre 0,1 et 10,0 h⁻¹, de préférence entre 0,1 et 5,0 h⁻¹, préférentiellement entre 0,2 et 2,0 h⁻¹, de manière préférée entre 0,2 et 0,8 h⁻¹. Selon l'invention, la « température d'hydrotraitement » correspond à une température moyenne dans la section réactionnelle d'hydrotraitement de l'étape b). En particulier, elle correspond à la Weight Average Bed Temperature (WABT) selon le terme anglo-saxon consacré, bien connue de l'Homme du métier. La température d'hydrotraitement est avantageusement déterminée en fonction des systèmes catalytiques, des équipements, de la configuration de ceux-ci, utilisés. Par exemple, la température d'hydrotraitement (ou WABT) est calculée de la manière suivante : WABT = (Tᵢₙ+2xTₒᵤₜ)/3
Avec Tᵢₙ : la température de l'effluent hydrogéné en entrée de la section réactionnelle d'hydrotraitement,
Tₒᵤₜ : la température de l'effluent en sortie de section réactionnelle d'hydrotraitement.

La vitesse volumique horaire (VVH) est définie ici comme le ratio entre le débit volumique horaire de l'effluent hydrogéné issu de l'étape a) par volume de catalyseur(s). La couverture en hydrogène dans l'étape b) est comprise entre 50 et 1000 Nm³ d'hydrogène par m³ de charge fraîche qui alimente l'étape a), et de préférence entre 50 et 500 Nm³ d'hydrogène par m³ de charge fraîche qui alimente l'étape a), de manière préférée entre 100 et 300 Nm³ d'hydrogène par m³ de charge fraîche qui alimente l'étape a). La couverture en hydrogène est définie ici comme le rapport du débit volumique d'hydrogène pris dans les conditions normales de température et pression par rapport au débit volumique de charge fraîche qui alimente l'étape a), c'est-à-dire de charge comprenant une huile de pyrolyse de plastiques, ou par la charge éventuellement prétraitée, qui alimente l'étape a) (en normaux m³ , noté Nm³, de H₂ par m³ de charge fraîche). L'hydrogène peut être constitué d'un appoint et/ou d'hydrogène recyclé issu en particulier de l'étape c) de séparation.

De préférence, un flux gazeux supplémentaire comprenant de l'hydrogène est avantageusement introduit en entrée de chaque réacteur, en particulier fonctionnant en série, et/ou en entrée de chaque lit catalytique à partir du second lit catalytique de la section réactionnelle d'hydrotraitement. Ces flux gazeux supplémentaires sont appelés encore flux de refroidissement. Ils permettent de contrôler la température dans le réacteur d'hydrotraitement dans lequel les réactions mises en œuvre sont généralement très exothermiques.

Avantageusement, ledit au moins catalyseur d'hydrotraitement utilisé dans ladite étape b) peut être choisi parmi des catalyseurs connus d'hydrodémétallation, d'hydrotraitement, de captation du silicium, utilisés notamment pour le traitement des coupes pétrolières, et leurs combinaisons. Des catalyseurs d'hydrodémétallation connus sont par exemple ceux décrits dans les brevets EP 0113297, EP 0113284, US 5221656, US 5827421, US 7119045, US 5622616 et US 5089463. Des catalyseurs d'hydrotraitement connus sont par exemple ceux décrits dans les brevets EP 0113297, EP 0113284, US 6589908, US 4818743 ou US 6332976. Des catalyseurs de captation du silicium connus sont par exemple ceux décrits dans les demandes de brevets CN 102051202, US 2007/080099.

En particulier, ledit au moins catalyseur d'hydrotraitement comprend un support, de préférence minéral, et au moins un élément métallique ayant une fonction hydro-déshydrogénante. Ledit au moins élément métallique ayant une fonction hydro-déshydrogénante comprend avantageusement au moins un élément du groupe VIII, de préférence choisi dans le groupe constitué par le nickel et le cobalt, et/ou au moins un élément du groupe VIB, de préférence choisi dans le groupe constitué par le molybdène et le tungstène. La teneur totale en oxydes des éléments métalliques des groupes VIB et VIII est de préférence entre 1% et 40% en poids, préférentiellement de 5% à 30% en poids, par rapport au poids total du catalyseur. Le rapport pondéral exprimé en oxyde métallique entre le métal (ou les métaux) du groupe VIB par rapport au métal (ou aux métaux) du groupe VIII est de préférence compris entre 1,0 et 20, de manière préférée entre 2,0 et 10. Par exemple, la section réactionnelle d'hydrotraitement de l'étape b) du procédé comprend un catalyseur d'hydrotraitement comprenant entre 0,5% et 10% en poids de nickel, de préférence entre 1% et 5% en poids de nickel, exprimé en oxyde de nickel NiO par rapport au poids total du catalyseur d'hydrotraitement, et entre 1,0% et 30% en poids de molybdène, de préférence entre 3,0% et 20% en poids de molybdène, exprimé en oxyde de molybdène MoO₃ par rapport au poids total du catalyseur d'hydrotraitement, sur un support minéral.

Le support dudit au moins catalyseur d'hydrotraitement est avantageusement choisi parmi l'alumine, la silice, les silices-alumines, la magnésie, les argiles et leurs mélanges. Ledit support peut en outre renfermer des composés dopants, notamment des oxydes choisis parmi l'oxyde de bore, en particulier le trioxyde de bore, la zircone, la cérine, l'oxyde de titane, l'anhydride phosphorique et un mélange de ces oxydes. De préférence, ledit au moins catalyseur d'hydrotraitement comprend un support d'alumine, de manière préférée un support d'alumine dopé avec du phosphore et éventuellement du bore. Lorsque l'anhydride phosphorique P₂O₅ est présent, sa concentration est inférieure à 10% en poids par rapport au poids de l'alumine et avantageusement d'au moins 0,001 % poids par rapport au poids total de l'alumine. Lorsque le trioxyde de bore B₂O₅ est présent, sa concentration est inférieure à 10% en poids par rapport au poids de l'alumine et avantageusement d'au moins 0,001 % par rapport au poids total de l'alumine. L'alumine. L'alumine utilisée peut être par exemple une alumine y (gamma) ou η (êta).

Ledit catalyseur d'hydrotraitement est par exemple sous forme d'extrudés.

Avantageusement, ledit au moins catalyseur d'hydrotraitement utilisé dans l'étape b) du procédé présente une surface spécifique supérieure ou égale à 250 m²/g, de préférence supérieure ou égale à 300 m²/g. La surface spécifique dudit catalyseur d'hydrotraitement est avantageusement inférieure ou égale à 800 m²/g, de préférence inférieure ou égale à 600 m²/g, en particulier inférieure ou égale à 400 m²/g. La surface spécifique du catalyseur d'hydrotraitement est mesurée par la méthode BET, c'est-à-dire la surface spécifique déterminée par adsorption d'azote conformément à la norme ASTM D 3663-78 établie à partir de la méthode BRUNAUER-EMMETT-TELLER décrite dans le périodique 'The Journal of the American Chemical Society", 6Q, 309 (1938). Une telle surface spécifique permet d'améliorer encore l'élimination des contaminants, en particulier des métaux comme le silicium.

L'étape b) d'hydrotraitement permet avantageusement un traitement optimisé de l'effluent hydrogéné issu de l'étape a). Elle permet, en particulier, de maximiser l'hydrogénation des liaisons insaturées des composés oléfiniques présents dans l'effluent hydrogéné issu de l'étape a), l'hydrodémétallation dudit effluent hydrogéné et la captation des métaux, notamment le silicium, encore présents dans l'effluent hydrogéné. L'étape b) d'hydrotraitement permet également l'hydrodéazotation (HDN) de l'effluent hydrogéné, c'est-à-dire la conversion des espèces azotés encore présentes dans l'effluent hydrogéné. De préférence, la teneur en azote de l'effluent d'hydrotraitement à l'issue de l'étape b) est inférieure ou égale à 10 ppm en poids.

Dans un mode de réalisation préféré de l'invention, ladite section réactionnelle d'hydrotraitement comprend plusieurs réacteurs à lit fixe, préférentiellement entre deux et cinq, très préférentiellement entre deux et quatre, réacteurs à lit fixe, ayant chacun n lits catalytiques, n étant un nombre entier supérieur ou égal à un, de préférence compris entre un et dix, de manière préférée compris entre deux et cinq, et fonctionnant avantageusement en série et/ou en parallèle et/ou en mode permutable (ou PRS) et/ou en mode « swing ». Les différents modes de fonctionnement éventuels, mode PRS (ou lead and lag) et mode swing, et sont bien connus de l'Homme du métier et sont avantageusement définis plus haut. L'avantage d'une section réactionnelle d'hydrotraitement comprenant plusieurs réacteurs réside dans un traitement optimisé de l'effluent hydrogéné, tout en permettant de diminuer les risques de colmatage du ou des lits catalytiques et donc d'éviter l'arrêt de l'unité dû au colmatage.

Selon un mode de réalisation très préféré de l'invention, ladite section réactionnelle d'hydrotraitement comprend, de préférence consiste en :
- (b1) deux réacteurs à lit fixe fonctionnant en mode swing ou PRS, de préférence en mode PRS, chacun des deux réacteurs ayant de préférence un lit catalytique comprenant avantageusement un catalyseur d'hydrotraitement de préférence choisi parmi des catalyseurs connus d'hydrodémétallation, de captation du silicium et leurs combinaisons, et
- (b2) au moins un réacteur à lit fixe, de préférence un réacteur, situé en aval des deux réacteurs (b1), et avantageusement fonctionnant en série des deux réacteurs (b1), ledit réacteur (b2) à lit fixe ayant entre 1 et 5 lits catalytiques disposés en série et comprenant chacun entre un et dix catalyseur(s) d'hydrotraitement dont au moins un desdits catalyseurs d'hydrotraitement comprend avantageusement un support et au moins un élément métallique comprenant de préférence au moins un élément du groupe VIII, de préférence choisi parmi le nickel et le cobalt, et/ou au moins un élément du groupe VIB, de préférence choisi parmi le molybdène et le tungstène.

Eventuellement, l'étape b) peut mettre en œuvre une section de chauffe située en amont de la section réactionnelle d'hydrotraitement et dans laquelle l'effluent hydrogéné issu de l'étape a) est chauffé pour atteindre une température adaptée pour l'hydrotraitement, c'est-à-dire une température comprise entre 250 et 430°C. Ladite éventuelle section de chauffe peut ainsi comprendre un ou plusieurs échangeurs, permettant de préférence un échange de chaleur entre l'effluent hydrogéné et l'effluent d'hydrotraitement, et/ou un four de préchauffe.

Avantageusement, l'étape b) d'hydrotraitement permet l'hydrogénation totale des oléfines présentes dans la charge initiale et celles éventuellement obtenues après l'étape a) d'hydrogénation sélective, mais aussi la conversion au moins en partie d'autres impuretés présentes dans la charge, comme les composés aromatiques, les composés métalliques, les composés soufrés, les composés azotés, les composés halogénés (notamment les composés chlorés), les composés oxygénés. L'étape b) peut également permettre de réduire encore la teneur en contaminants, comme celle des métaux, en particulier la teneur en silicium.

### Etape c) de séparation

Selon l'invention, le procédé de traitement comprend une étape c) de séparation, mise en oeuvre dans au moins une section de lavage/séparation alimentée au moins par l'effluent d'hydrotraitement issu de l'étape b) et une solution aqueuse, pour obtenir au moins un effluent gazeux, un effluent aqueux et un effluent hydrocarboné.

L'effluent gazeux obtenu à l'issu de l'étape c) comprend avantageusement de l'hydrogène, de préférence comprend au moins 90% volume, de préférence au moins 95% volume, de manière préférée au moins 99% volume d'hydrogène. Avantageusement, ledit effluent gazeux peut au moins en partie être recyclé vers les étapes a) d'hydrogénation sélective et/ou b) d'hydrotraitement, le système de recyclage pouvant comprendre une section de purification.

L'effluent aqueux obtenu à l'issu de l'étape c) comprend avantageusement des sels d'ammonium et/ou de l'acide chlorhydrique.

L'effluent hydrocarboné issu de l'étape c) comprend des composés hydrocarbonés et correspond avantageusement à l'huile de pyrolyse de plastiques de la charge, ou à l'huile de pyrolyse de plastiques et de la fraction de charge pétrolière conventionnelle co-traitée avec l'huile de pyrolyse, débarrassées au moins en partie de ses impuretés, en particulier de ses impuretés oléfiniques (di- et mono-oléfines), métalliques, halogénées.

Cette étape c) de séparation permet en particulier d'éliminer les sels de chlorure d'ammonium, qui se forment par réaction entre les ions chlorure, libérés par l'hydrogénation des composés chlorés lors de l'étape b), et les ions ammonium, générés par l'hydrogénation des composés azotés lors de l'étape b) et/ou apportés par injection d'une amine, et ainsi de limiter les risques de bouchage, en particulier dans les lignes de transfert et/ou dans les sections du procédé de l'invention et/ou les lignes de transfert vers le vapocraqueur, dû à la précipitation des sels de chlorure d'ammonium. Il permet aussi d'éliminer l'acide chlorhydrique formé par la réaction des ions hydrogène et des ions chlorures.

En fonction de la teneur en composés chlorés dans la charge initiale à traiter, un flux d'amines peut être injecté en amont de l'étape a) d'hydrogénation sélective, entre l'étape a) d'hydrogénation sélective et l'étape b) d'hydrotraitement et/ou entre l'étape b) d'hydrotraitement et l'étape c) de séparation, de préférence en amont de l'étape a) d'hydrogénation sélective, afin d'assurer une quantité suffisante en ions ammonium pour combiner les ions chlorure formés lors de l'étape d'hydrotraitement, permettant ainsi de limiter la formation d'acide chlorhydrique et ainsi de limiter la corrosion en aval de la section de séparation.

L'étape c) de séparation comprend une injection d'une solution aqueuse, de préférence une injection d'eau, dans l'effluent d'hydrotraitement issu de l'étape b), en amont de la section de lavage/séparation, de manière à dissoudre au moins en partie des sels de chlorure d'ammonium et/ou de l'acide chlorhydrique et améliorer ainsi l'élimination des impuretés chlorées et réduire les risques de bouchages dus à une accumulation des sels de chlorure d'ammonium.

L'étape c) de séparation est opérée à une température comprise entre 200 et 300°C. Avantageusement, l'étape c) de séparation est opérée à une pression proche de celle mise en oeuvre dans les étapes a) et/ou b), de préférence entre 1,0 et 10,0 MPa, de manière à faciliter le recyclage d'hydrogène.

La section de lavage/séparation de l'étape c) peut au moins en partie être réalisée dans des équipements de lavage et de séparation communs ou distincts, ces équipements étant bien connus (ballons séparateurs pouvant opérés à différentes pressions et températures, pompes, échangeurs de chaleurs, colonnes de lavage, etc.).

Dans un mode de réalisation éventuel de l'invention, pris en complément ou isolément d'autres modes de réalisation de l'invention décrits, l'étape c) de séparation comprend l'injection d'une solution aqueuse dans l'effluent d'hydrotraitement issu de l'étape b) suivi de la section de lavage/séparation comprenant avantageusement une phase de séparation permettant d'obtenir au moins un flux aqueux chargé en sels d'ammonium, un flux hydrocarboné liquide lavé et un flux gazeux partiellement lavé. Le flux aqueux chargé en sels d'ammonium et le flux hydrocarboné liquide lavé peuvent ensuite être séparés dans un ballon décanteur afin d'obtenir ledit effluent hydrocarboné et ledit effluent aqueux. Ledit flux gazeux partiellement lavé peut parallèlement être introduit dans une colonne de lavage où il circule à contrecourant d'un flux aqueux, de préférence de même nature que la solution aqueuse injectée dans l'effluent d'hydrotraitement, ce qui permet d'éliminer au moins en partie, de préférence en totalité , l'acide chlorhydrique contenu dans le flux gazeux partiellement lavé et d'obtenir ainsi ledit effluent gazeux, comprenant de préférence essentiellement de l'hydrogène, et un flux aqueux acide. Ledit effluent aqueux issue du ballon décanteur peut éventuellement être mélangé avec ledit flux aqueux acide, et être utilisé, éventuellement en mélange avec ledit flux aqueux acide dans un circuit de recyclage d'eau pour alimenter l'étape c) de séparation en ladite solution aqueuse en amont de la section de lavage/séparation et/ou en ledit flux aqueux dans la colonne de lavage. Ledit circuit de recyclage d'eau peut comporter un appoint d'eau et/ou d'une solution basique et/ou une purge permettant d'évacuer les sels dissous.

Dans un autre mode de réalisation éventuel de l'invention, pris séparément ou en combinaison d'autres modes de réalisation de l'invention décrits, l'étape c) de séparation peut comprendre avantageusement une section de lavage/séparation à « haute pression » qui opère à une pression proche de la pression de l'étape a) d'hydrogénation sélective et/ou de l'étape b) d'hydrotraitement, afin de faciliter le recyclage d'hydrogène. Cette éventuelle section « haute pression » de l'étape c) peut être complétée par une section « basse pression », afin d'obtenir une fraction liquide hydrocarbonée dépourvue d'une partie des gaz dissous à haute pression et destinée à être traitée directement dans un procédé de vapocraquage ou optionnellement être envoyée dans l'étape d) de fractionnement.

L'effluent hydrocarboné issu de l'étape c) de séparation est envoyé, en partie ou en totalité, soit directement en entrée d'une unité de vapocraquage, soit vers une étape d) optionnelle de fractionnement. De préférence, l'effluent liquide hydrocarboné est envoyé, en partie ou en totalité, de manière préférée en totalité, vers une étape d) de fractionnement.

### Etape d) (optionnelle) de fractionnement

Le procédé selon l'invention peut comprendre une étape de fractionnement de tout ou partie, de manière préférée de la totalité, de l'effluent hydrocarboné issu de l'étape c), pour obtenir au moins un flux gazeux et au moins un flux hydrocarboné.

Dans un mode de réalisation particulier, l'étape optionnelle d) de fractionnement peut permettre d'obtenir, outre ledit au moins flux gazeux, au moins deux flux hydrocarbonés ayant des points d'ébullition différents l'un de l'autre. Ladite étape d) de fractionnement peut par exemple permettre d'obtenir, outre un flux gazeux, une coupe naphta comprenant des composés ayant un point d'ébullition inférieur à 150°C, de préférence entre 80 et 150°C, et une coupe hydrocarbonée comprenant des composés ayant un point d'ébullition supérieur à 150°C, ou une coupe naphta comprenant des composés ayant un point d'ébullition inférieur à 150°C, en particulier entre 80 et 150°C, une coupe diesel comprenant des composés ayant un point d'ébullition entre 150°C et 385°C, et une coupe hydrocarbonée comprenant des composés ayant un point d'ébullition supérieur à 385°C dite coupe hydrocarbonée lourde.

L'étape d) permet, notamment sous l'action d'un flux de vapeur d'eau, en particulier d'éliminer les gaz dissous dans l'effluent liquide hydrocarboné, comme par exemple de l'ammoniac, de l'hydrogène sulfuré et des hydrocarbures légers ayant 1 à 4 atomes de carbone.

L'étape d) optionnelle de fractionnement est avantageusement opérée à une pression inférieure ou égale à 1,0 MPa abs., de préférence entre 0,1 et 1,0 MPa abs.

Selon un mode de réalisation, l'étape d) peut être opérée dans une section comprenant avantageusement au moins une colonne de stripage équipée d'un circuit de reflux comprenant un ballon de reflux. Ladite colonne de stripage est alimentée par l'effluent liquide hydrocarboné issu de l'étape c) et par un flux de vapeur d'eau. L'effluent liquide hydrocarboné issu de l'étape c) peut être éventuellement réchauffé avant l'entrée dans la colonne de stripage. Ainsi, les composés les plus légers sont entrainés en tête de colonne et dans le circuit de reflux comprenant un ballon de reflux dans lequel s'opère une séparation gaz/liquide. La phase gazeuse qui comprend les hydrocarbure légers, est soutiré du ballon de reflux, en un flux gazeux. Au moins une fraction de la phase liquide est avantageusement soutiré du ballon de reflux, en un flux hydrocarboné de point d'ébullition relativement bas, par exemple une coupe naphta de point d'ébullition inférieur à 150°C. Un flux hydrocarboné, avantageusement liquide, de point d'ébullition supérieur au flux hydrocarboné soutiré en tête de colonne, par exemple supérieur à 150°C, est soutiré en fond de colonne de stripage.

Selon d'autres modes de réalisation, l'étape d) de fractionnement peut mettre en œuvre une colonne de stripage suivie d'une colonne de distillation ou uniquement une colonne de distillation.

Le ou les flux hydrocarboné(s) obtenu(s), par exemple la coupe naphta comprenant des composés ayant un point d'ébullition inférieur à 150°C et la coupe comprenant des composés ayant un point d'ébullition supérieur à 150°C, éventuellement mélangés, peu(ven)t être envoyés, en tout ou partie, de préférence en partie, vers une unité de vapocraquage, à l'issue de laquelle des oléfines pourront être (re)formées pour participer à la formation de polymères, De préférence, une partie seulement du ou d'au moins un des flux hydrocarboné(s) obtenu(s) est envoyée vers une unité de vapocraquage ; au moins une fraction de la partie restante du ou d'au moins un des flux hydrocarboné(s) obtenu(s) est éventuellement envoyée vers l'étape e) de recyclage et/ou vers un pool carburant, par exemple pool naphta, pool diesel ou pool kérosène, issu de charges pétrolières conventionnelles.

Par exemple, à l'issue de l'étape optionnelle d) de fractionnement qui a permis d'obtenir deux flux hydrocarbonés , le flux naphta comprenant avantageusement des composés ayant un point d'ébullition inférieur à 150°C, peut être envoyé en tout ou partie vers un pool naphta, c'est-à-dire vers les effluents naphta issus de charges pétrolières plus conventionnelles, le deuxième flux hydrocarboné comprenant avantageusement des composés ayant un point d'ébullition supérieur à 150°C étant quant à lui envoyé, en tout ou partie, vers une unité de vapocraquage. Selon un autre exemple, l'étape d) optionnelle conduit à l'obtention au moins d'une coupe naphta (en particulier comprenant des composés ayant un point d'ébullition inférieur à 150°C), d'une coupe diesel (en particulier comprenant des composés ayant un point d'ébullition entre 150°C et 385°C) et d'une coupe lourde (en particulier comprenant des composés ayant un point d'ébullition supérieur à 385°C) ; la coupe naphta peut être envoyée, en tout ou partie, vers le pool naphta issu de charges pétrolières conventionnelles ; la coupe diesel peut également être, en tout ou partie, soit envoyée vers une unité de vapocraquage, soit vers un pool diesel issu de charges pétrolières conventionnelles ; la coupe lourde peut quant à elle être envoyée, au moins en partie, vers une unité de vapocraquage, ou éventuellement envoyée au moins en partie vers une autre unité de traitement de charges pétrolières conventionnelles, comme par exemple une unité de traitement des distillats sous vide telle qu'une unité d'hydrocraquage.

### Etape e) (éventuelle) de recyclage d'une partie du produit

Le procédé selon l'invention comprend l'étape e) de recyclage, dans laquelle une fraction de l'effluent hydrocarboné issu de l'étape c) de séparation ou une fraction du ou d'au moins un des flux hydrocarboné(s) issu(s) de l'étape d) optionnelle de fractionnement, est récupérée pour constituer un flux de recycle qui est envoyé en amont de ou directement vers au moins l'une des étapes réactionnelles du procédé selon l'invention, en particulier vers l'étape a) d'hydrogénation sélective et/ou l'étape b) d'hydrotraitement. Eventuellement, une fraction du flux de recycle peut être envoyée vers l'étape a0) optionnelle. De préférence, le procédé selon l'invention comprend l'étape e) de recyclage.

L'étape e) de recyclage comprend une phase de récupération d'une fraction de l'effluent hydrocarboné issu de l'étape c) de séparation ou une fraction du ou d'au moins un des flux hydrocarboné(s) issu(s) de l'étape d) optionnelle de fractionnement pour constituer le flux de recycle et une phase de recyclage dudit flux de recycle au moins vers l'étape a) d'hydrogénation sélective, vers l'étape b) d'hydrotraitement ou au moins vers les étapes a) et b). Le flux de recycle peut alimenter lesdites étapes réactionnelles a) ou b) en une seule injection ou peut être divisé en plusieurs fractions pour alimenter les étapes réactionnelles a) et/ou b) en plusieurs injections, c'est-à-dire au niveau de différents lits catalytiques. De préférence, au moins une fraction du flux de recycle alimente l'étape b) d'hydrotraitement. Eventuellement, une fraction du flux de recycle peut alimenter l'étape a0) optionnelle de prétraitement. De préférence, en fin d'étape b), la totalité du flux de recycle est ré-introduite dans le procédé.

Avantageusement, la quantité du flux de recycle, c'est-à-dire la fraction de produit obtenu recyclée, est ajustée de sorte que le rapport pondéral entre le flux de recycle et la charge comprenant une huile de pyrolyse de plastiques, c'est-à-dire la charge à traiter alimentant le procédé global, est inférieur ou égal à 10, de préférence inférieur ou égal à 5, et préférentiellement supérieur ou égal à 0,001, de préférence supérieur ou égal à 0,01, et de manière préférée supérieur ou égal à 0,1. De manière très préférée, la quantité du flux de recycle est ajustée de sorte que le rapport pondéral entre le flux de recycle et la charge comprenant une huile de pyrolyse de plastiques est compris entre 0,2 et 5.

Avantageusement, pour les phases de démarrage du procédé, une coupe hydrocarbonée externe au procédé peut être utilisée comme flux de recycle. L'Homme du métier saura alors choisir ladite coupe hydrocarbonée.

Le recyclage d'une partie du produit obtenu vers ou en amont de au moins une des étapes réactionnelles du procédé selon l'invention permet avantageusement d'une part de diluer les impuretés et d'autre part de contrôler la température dans la ou les étape(s) réactionnelle(s), dans la(les)quelle(s) des réactions mises en jeu peuvent être fortement exothermiques.

Selon un mode de réalisation préféré de l'invention, le procédé de traitement d'une charge comprenant une huile de pyrolyse de plastiques comprend, de préférence consiste en, l'enchainement des étapes, et de préférence dans l'ordre donné, a) d'hydrogénation sélective, b) d'hydrotraitement c) de séparation et d) de fractionnement, pour produire une huile de pyrolyse de plastiques traitée et de composition compatible avec l'entrée d'une unité de vapocraquage.

Selon un autre mode de réalisation préféré de l'invention, le procédé de traitement d'une charge comprenant une huile de pyrolyse de plastiques comprend, de préférence consiste en, l'enchainement des étapes, et de préférence dans l'ordre donné, a0) de prétraitement, a) d'hydrogénation sélective, b) d'hydrotraitement, c) de séparation et d) de fractionnement, pour produire une huile de pyrolyse de plastiques traitée et de composition compatible avec l'entrée d'une unité de vapocraquage.

Selon un troisième mode de réalisation préféré de l'invention, le procédé de traitement d'une charge comprenant une huile de pyrolyse de plastiques comprend, de préférence consiste en, l'enchainement des étapes, et de préférence dans l'ordre donné, a) d'hydrogénation sélective, b) d'hydrotraitement, c) de séparation, d) de fractionnement et e) de recyclage d'une fraction du produit, pour produire une huile de pyrolyse de plastiques traitée et de composition compatible avec l'entrée d'une unité de vapocraquage.

Selon un quatrième mode de réalisation préféré de l'invention, le procédé de traitement d'une charge comprenant une huile de pyrolyse de plastiques comprend, de préférence consiste en, l'enchainement des étapes, et de préférence dans l'ordre donné, a0) de prétraitement, a) d'hydrogénation sélective, b) d'hydrotraitement, c) de séparation, d) de fractionnement et e) de recyclage d'une fraction du produit, pour produire une huile de pyrolyse de plastiques traitée et de composition compatible avec l'entrée d'une unité de vapocraquage.

Ledit effluent hydrocarboné ou le(s)dit(s) flux hydrocarboné(s) ainsi obtenu(s) par traitement selon le procédé de l'invention d'une huile de pyrolyse de plastiques, présente(nt) une composition compatible avec les spécifications d'une charge en entrée d'une unité de vapocraquage. En particulier, la composition de l'effluent hydrocarboné ou du(des)dit(s) flux hydrocarboné(s) est de préférence telle que :
- la teneur totale en éléments métalliques est inférieure ou égale à 5,0 ppm poids, de préférence inférieure ou égale à 2,0 ppm poids, préférentiellement inférieure ou égale à 1,0 ppm poids et de manière préférée inférieure ou égale à 0,5 ppm poids, avec :
   une teneur en élément silicium (Si) inférieure ou égale à 1,0 ppm poids, de préférence inférieure ou égale à 0,6 ppm poids, et
   une teneur en élément fer (Fe) inférieure ou égale à 100 ppb poids,
- la teneur en soufre est inférieure ou égale à 500 ppm poids, de préférence inférieure ou égale à 200 ppm poids,
- la teneur en azote est inférieure ou égale à 500 ppm poids, de préférence inférieure ou égale à 200 ppm poids,
- la teneur en asphaltènes est inférieure ou égale à 5,0 ppm poids,
- la teneur totale en élément chlore est inférieure ou égale à 50 ppb poids,
- la teneur en composés oléfiniques (mono- et di-oléfines) est inférieure ou égale à 5,0% poids, de préférence inférieure ou égale à 2,0% poids, de manière préférée inférieure ou égale à 0,5% poids.

Les teneurs sont données en concentrations pondérales relatives, pourcentage (%) poids, partie(s) par million (ppm) poids ou partie(s) par milliard (ppb) poids, par rapport au poids total du flux considéré.

Le procédé selon l'invention permet donc de traiter les huiles de pyrolyse de plastiques pour obtenir un effluent qui peut être injecté, en tout ou partie, dans une unité de vapocraquage. Le procédé selon l'invention permet ainsi de valoriser les huiles de pyrolyse de plastiques, tout en en réduisant la formation de coke et ainsi les risques de bouchage et/ou de pertes prématurées d'activité du/des catalyseurs utilisés dans l'unité de vapocraquage, et en diminuant les risques de corrosion.

### Etape f) de vapocraquage (optionnelle)

L'effluent hydrocarboné issu de l'étape c) de séparation, ou le ou au moins l'un des flux hydrocarboné(s) issu(s) de l'étape d) optionnelle, peut être en tout ou partie envoyé vers une étape f) de vapocraquage.

Ladite étape f) de vapocraquage est avantageusement réalisée dans au moins un four de pyrolyse à une température comprise entre 700 et 900°C, de préférence entre 750 et 850°C, et à une pression comprise entre 0,05 et 0,3 MPa relatif. Le temps de séjour des composés hydrocarbonés est généralement inférieur ou égale à 1,0 seconde (noté s), de préférence compris entre 0,1 et 0,5 s. Avantageusement, de la vapeur d'eau est introduite en amont de l'étape f) de vapocraquage optionnelle et après la séparation (ou le fractionnement). La quantité d'eau introduite, avantageusement sous forme de vapeur d'eau, est comprise entre 0,3 et 3,0 kg d'eau par kg de composés hydrocarbonés en entrée de l'étape f). De préférence, l'étape f) optionnelle est réalisée dans plusieurs fours de pyrolyse en parallèle de manière à adapter les conditions opératoires aux différents flux alimentant l'étape f) notamment issus de l'étape d), et aussi à gérer les temps de décodage des tubes. Un four comprend un ou plusieurs tubes disposés en parallèle. Un four peut également désigner un groupe de fours opérant en parallèle. Par exemple, un four peut être dédié au craquage d'un flux hydrocarboné comprenant des composés ayant une température d'ébullition inférieure à 150°C, en particulier entre 80 et 150°C, et un autre four dédié au flux hydrocarboné comprenant des composés ayant une température d'ébullition supérieure à 150°C.

Cette étape de f) de vapocraquage permet d'obtenir au moins un effluent contenant des oléfines comprenant 2, 3 et/ou 4 atomes de carbone (c'est-à-dire des oléfines en C2, C3 et/ou C4), à des teneurs satisfaisantes, en particulier supérieures ou égales à 30% poids, notamment supérieures ou égales 40% poids, voire supérieures ou égales 50% poids d'oléfines totales comprenant 2, 3 et 4 atomes de carbone par rapport au poids de l'effluent de vapocraquage considéré. Lesdites oléfines en C2, C3 et C4 peuvent ensuite être avantageusement utilisées comme monomères de polyoléfines.

Selon un ou plusieurs mode(s) de réalisation préféré(s) de l'invention, pris séparément ou combinés entre eux, le procédé de traitement d'une charge comprenant une huile de pyrolyse de plastiques comprend, de préférence consiste en, l'enchainement des étapes décrites ci-dessus, et de préférence dans l'ordre donné, c'est-à-dire : l'étape a0) de prétraitement, l'étape a) d'hydrogénation sélective, l'étape b) d'hydrotraitement, l'étape c) de séparation, optionnellement l'étape d) de fractionnement, et l'étape f) de vapocraquage.

Le procédé selon l'invention, lorsqu'il comprend cette étape f) de vapocraquage, permet ainsi d'obtenir à partir d'huiles de pyrolyse de plastiques, par exemple de déchets plastiques, des oléfines pouvant servir de monomères à la synthèse de nouveaux polymères contenus dans les plastiques, à des rendements relativement satisfaisants, sans bouchage ni corrosion des unités.

Les figures et exemples suivants illustrent l'invention sans en limiter la portée.

### Méthodes d'analyse utilisées

Les méthodes d'analyses et/ou normes utilisées pour déterminer les caractéristiques des différents flux en particuliers de la charge à traiter et des effluents, sont connues de l'Homme du métier. Elles sont en particulier listées ci-dessous :

**Tableau 1**

| **Caractéristiques** | **Méthodes** |
|---|---|
| Masse volumique @15°C | ASTM D4052 |
| Teneur en soufre | ISO 20846 |
| Teneur en azote | ASTM D4629 |
| Indice d'acide | ASTM D664 |
| Teneur en Brome | ASTM D1159 |
| *Teneur en Di-Oléfines à partir de l'Indice d'Anhydride Maléique* | Méthode MAV comme décrite dans l'article : C. López-García et al., Near Infrared Monitoring of Low Conjugated Diolefins Content in Hydrotreated FCC Gasoline Streams, Oil & Gas Science and Technology - Rev. IFP, Vol.62 (2007), No.1, 57-68 |
| *Teneur en oxygénés* | Combustion + Infra-Rouge |
| *Teneur en Paraffines* | UOP990-11 |
| *Teneur en Naphthènes* | UOP990-11 |
| *Teneur en Oléfines* | UOP990-11 |
| *Teneur en Aromatiques* | UOP990-11 |
| *Teneur en* Halogènes | ASTM-D7359 |
| Teneur en Asphaltènes | IFP9313 |
| Teneur en Chlorure | ASTM D7536 |
| Teneur en métaux : | ASTM-D5185 |
| P | |
| Fe | |
| Si | |
| Na | |
| B | |
| Distillation Simulée | ASTM D2887 |

### LISTE DES FIGURES

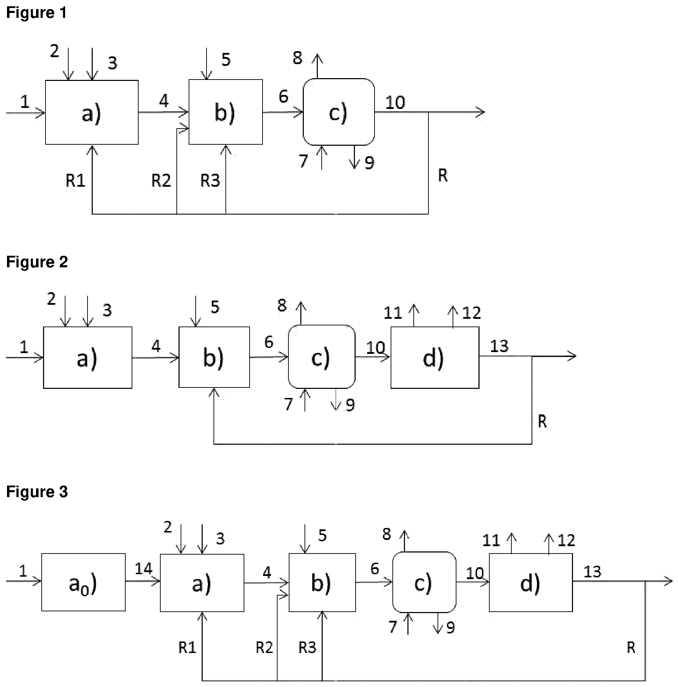

La mention des éléments référencés dans les Figures 1 à 3 permet une meilleure compréhension de l'invention, sans que celle-ci ne se limite aux modes de réalisation particuliers illustrés dans les Figures 1 à 3. Les différents modes de réalisation présentés peuvent être utilisés seul ou en combinaison les uns avec les autres, sans limitation de combinaison.

La Figure 1 représente le schéma d'un mode de réalisation particulier du procédé de la présente invention, comprenant :
- une étape a) d'hydrogénation sélective d'une charge hydrocarbonée issue de la pyrolyse de plastiques 1, en présence d'un gaz riche en hydrogène 2, d'une fraction R1 d'un flux de recycle R et éventuellement d'une amine apporté par le flux 3, réalisée dans au moins un réacteur en lit fixe comportant au moins un catalyseur d'hydrogénation sélective, pour obtenir un effluent 4 ;
- une étape b) d'hydrotraitement de l'effluent 4 issu de l'étape a), en présence d'hydrogène 5 et de deux fractions R2 et R3 d'un flux de recycle R, réalisée dans au moins un réacteur en lit fixe comportant au moins un catalyseur d'hydrotraitement, pour obtenir un effluent hydrotraité 6 ;
- une étape c) de séparation de l'effluent 6 réalisée en présence d'une solution aqueuse de lavage 7 et permettant d'obtenir au moins une fraction 8 comprenant de l'hydrogène, une fraction aqueuse 9 contenant des sels dissous, et une fraction liquide hydrocarbonée 10 ;
- le recyclage d'une partie R de la fraction hydrocarbonée 10 issue de l'étape c), ladite partie R constituant le flux de recycle et étant divisée en 3 fractions R1, R2, R3, pour alimenter l'étape a) d'hydrogénation sélective (fraction R1), et l'étape b) d'hydrotraitement (fractions R2 et R3).

Au lieu d'injecter le flux d'amine 3 en entrée de l'étape a) d'hydrogénation sélective, il est possible de l'injecter en entrée de l'étape b) d'hydrotraitement, en entrée de l'étape c) de séparation ou encore de ne pas l'injecter, en fonction des caractéristiques de la charge.

La Figure 2 représente un autre mode de réalisation particulier du procédé selon l'invention. Dans le mode de réalisation montré sur la Figure 2, la fraction liquide hydrocarbonée 10, obtenue à l'issue de l'étape c) est envoyée à une étape d) de fractionnement permettant d'obtenir au moins une fraction gazeuse 11, une fraction comprenant du naphta 12 et une fraction hydrocarbonée 13. Une partie R de la fraction hydrocarbonée 13 issue de l'étape d) constitue le flux de recycle qui alimente l'étape b) d'hydrotraitement.

La Figure 3 représente une variante de la mise en oeuvre du procédé selon l'invention représenté à la Figure 1. Dans le mode de réalisation montré sur la Figure 3, la charge hydrocarbonée issue de la pyrolyse de plastiques 1 subit une étape a0) de prétraitement, préalablement à l'étape a) d'hydrogénation sélective. La charge alors prétraitée 14 alimente l'étape a) d'hydrogénation sélective. Par ailleurs, la fraction liquide hydrocarbonée 10 obtenue à l'issue de l'étape c) est envoyée à une étape d) de fractionnement permettant d'obtenir au moins une fraction gazeuse 11, une fraction comprenant du naphta 12 et une fraction hydrocarbonée 13. Un flux de recycle R, constitué d'une partie de la fraction hydrocarbonée 13, est divisée en 3 fractions R1, R2, R3, pour alimenter l'étape a) d'hydrogénation sélective (fraction R1), et l'étape b) d'hydrotraitement (fractions R2 et R3)

Seules les principales étapes, avec les flux principaux, sont représentées sur les Figures 1 à 3, afin de permettre une meilleure compréhension de l'invention. Il est bien entendu que tous les équipements nécessaires au fonctionnement sont présents (ballons, pompes, échangeurs, fours, colonnes, etc.), même si non représentés. Il est également entendu que des flux de gaz riche en hydrogène (appoint ou recycle), comme décrit ci-dessus, peuvent être injectés en entrée de chaque réacteur ou lit catalytique ou entre deux réacteurs ou deux lits catalytiques. Des moyens bien connus de l'homme du métier de purification et de recyclage d'hydrogène peuvent être également mis en oeuvre.

A l'issue de l'étape d), la fraction comprenant du naphta 12 et/ou la fraction hydrocarbonée 13 est/sont envoyée(s) vers un procédé de vapocraquage.

### EXEMPLES

### Exemple 1 (conforme à l'invention)

La charge 1 traitée dans le procédé est une huile de pyrolyse de plastiques (c'est-à-dire comprenant 100% poids de ladite huile de pyrolyse de plastiques) présentant les caractéristiques indiquées dans le tableau 2.

**Tableau 2 : caractéristiques de la charge**

| **Description** / | **Méthodes** | **Unité** | **Huile de pyrolyse** |
|---|---|---|---|
| Masse volumique @15°C | ASTM D4052 | g/cm³ | 0,820 |
| Teneur en soufre | ISO 20846 | ppm poids | 25000 |
| Teneur en azote | ASTM D4629 | ppm poids | 730 |
| Indice d'acide | ASTM D664 | mgKOH/g | 1,5 |
| Teneur en Brome | ASTM D1159 | g/100g | 80 |
| *Teneur en Di-Oléfines à partir de l'Indice d'Anhydride Maléique* | Méthode MAV⁽¹⁾ | % poids | 10 |
| *Teneur en oxygénés* | Combustion - Infra-Rouge | % poids | 1,0 |
| *Teneur en Paraffines* | UOP990-11 | % poids | 45 |
| *Teneur en Naphthènes* | UOP990-11 | % poids | 20 |
| *Teneur en Oléfines* | UOP990-11 | % poids | 25 |
| *Teneur en Aromatiques* | UOP990-11 | % poids | 10 |
| *Teneur en* Halogènes | ASTM-D7359 | ppm poids | 350 |
| Teneur en Asphaltènes | IFP9313 | ppm poids | 380 |
| Teneur en Chlorure | ASTM D7536 | ppm poids | 320 |
| Teneur en métaux : | ASTM-D5185 | | |
| P | | ppm poids | 10 |
| Fe | | ppm poids | 25 |
| Si | | ppm poids | 45 |
| Na | | ppm poids | 2 |
| B | | ppm poids | 2 |
| Distillation Simulée : | ASTM D2887 | | |
| 0% | | °C | 40 |
| 10% | | °C | 98 |
| 30% | | °C | 161 |
| 50% | | °C | 232 |
| 70% | | °C | 309 |
| 90% | | °C | 394 |
| 100% | | °C | 432 |

| | | | |
|---|---|---|---|
| (1) Méthode MAV décrite dans l'article : C. López-García et al., Near Infrared Monitoring of Low Conjugated Diolefins Content in Hydrotreated FCC Gasoline Streams, Oil & Gas Science and Technology - Rev. IFP, Vol. 62 (2007), No. 1, pp. 57-68 | | | |

La charge 1 est soumise à une étape a) d'hydrogénation sélective réalisée dans un réacteur en lit fixe et en présence d'hydrogène 2 et d'un catalyseur d'hydrogénation sélective de type NiMo sur Alumine dans les conditions indiquées dans le tableau 3.

**Tableau 3 : conditions de l'étape a) d'hydrogénation sélective**

| Température | °C | 150 |
|---|---|---|
| Pression Partielle d'Hydrogène | MPa abs | 6,4 |
| H₂/HC (Couverture volumique d'hydrogène par rapport au volume de charge) | Nm³/m³ | 10 |
| VVH (débit volumique de charge/volume de catalyseurs) | h⁻¹ | 6 |

A l'issue de l'étape a) d'hydrogénation sélective, la totalité des dioléfines initialement présentes dans la charge ont été converties.

L'effluent 4 issu de l'étape a) d'hydrogénation sélective est soumis directement, sans séparation, à une étape b) d'hydrotraitement réalisée en lit fixe et en présence d'hydrogène 5, d'un flux hydrocarboné de recycle R, et d'un catalyseur d'hydrotraitement de type NiMo sur Alumine dans les conditions présentées dans le tableau 4.

**Tableau 4 : conditions de l'étape b) d'hydrotraitement**

| Température d'hydrotraitement | °C | 355 |
|---|---|---|
| Pression Partielle d'Hydrogène | MPa abs | 6,2 |
| H₂/HC (Couverture volumique d'hydrogène par rapport au volume de charge) | Nm³/m³ | 300 |
| VVH (débit volumique de charge/volume de catalyseurs) | h⁻¹ | 0,5 |

L'effluent 6 issu de l'étape b) d'hydrotraitement est soumis à une étape c) de séparation dans laquelle un flux d'eau est injecté dans l'effluent issu de l'étape b) d'hydrotraitement ; le mélange est ensuite traité dans une colonne de lavage des gaz acides, des ballons séparateurs. Puis l'effluent liquide obtenu est envoyé dans une étape d) de fractionnement qui comprend une colonne de stripage. Les rendements des différentes fractions obtenues après séparation et fractionnement sont indiqués dans le tableau 5 (les rendements étant correspondant aux rapports des quantités massiques des différents produits obtenus par rapport à la masse de charge en amont de l'étape a), exprimés en pourcentage et notés % m/m).

**Tableau 5 : rendements des différents produits obtenus après séparation et fractionnement**

| | | |
|---|---|---|
| NH₃ + H₂S | % m/m | 0,35 |
| Fraction C1-C4 | % m/m | 0,50 |
| Fraction PI-150°C | % m/m | 28,10 |
| Fraction 150°C+ | % m/m | 71,40 |
| Fraction PI+ (mélange des fractions PI-150°C et 150°C+) | % m/m | 99,50 |

Une partie de la fraction 150°C+ est recyclée vers l'étape b) d'hydrotraitement sous forme de flux de recycle. La quantité de fraction 150°C+ est ajustée de sorte que le ratio pondéral entre la fraction recyclée et la charge 1 fraîche est de 1.

Il apparait que l'écart de température entre l'entrée et la sortie de la section réactionnelle d'hydrotraitement, la température d'hydrotraitement (ou température moyenne d'hydrotraitement, WABT) étant ajustée à 355°C, est réduit par rapport à un procédé conforme à l'invention mais ne comprenant pas de recyclage d'une fraction de l'effluent hydrocarboné obtenu. Ceci signifie que le recyclage d'une fraction de l'effluent hydrocarboné obtenu permet de contrôler la température dans la section réactionnelle d'hydrotraitement dans laquelle les réactions mises en jeu sont fortement exothermiques.

Les caractéristiques des fractions liquides PI-150°C et 150°C+(ainsi que la fraction Pl+ qui est la somme des fractions PI-150°C et 150°C+) obtenues après l'étape c) de séparation et une étape de fractionnement sont présentés tableau 6 :

**Tableau 6 : caractéristiques des fraction PI-150°C, 150°C+ et Pl+**

| Analyse (méthode) | | Fraction PI-150°C | Fraction 150°C+ | Fraction PI+ |
|---|---|---|---|---|
| Masse volumique @ 15°C (ASTM D4052) | g/cm³ | 0,750 | 0,827 | 0,804 |

| Teneur en : | | | | |
|---|---|---|---|---|
| Soufre (ASTM D5453) | ppm poids | < 2 | < 10 | < 10 |
| Azote (ASTM D4629) | ppm poids | < 0,5 | < 5 | < 5 |
| Fe (ASTM D5185) | ppb poids | Non détecté | < 50 | < 50 |
| Métaux Totaux (ASTM D5185) | ppm poids | Non détecté | < 1 | < 1 |
| Chlore (ASTM D7536) | ppb poids | Non détecté | < 25 | < 25 |
| *Paraffines (UOP990-11)* | % poids | 68 | 65 | 66 |
| *Naphthènes (UOP990-11)* | % poids | 30,5 | 33 | 32 |
| *Oléfines (UOP990-11)* | % poids | non détecté | non détecté | non détecté |
| *Aromatiques (UOP990-11)* | % poids | 1,5 | 2 | 2 |

| *Distillation Simulée (ASTM D2887)* | | | | |
|---|---|---|---|---|
| *0%* | *°C* | 25 | 150 | 25 |
| *5%* | *°C* | 32 | 162 | 53 |
| *10%* | *°C* | 40 | 174 | 92 |
| *30%* | *°C* | 82 | 226 | 155 |
| *50%* | *°C* | 108 | 281 | 227 |
| *70%* | *°C* | 126 | 346 | 305 |
| *90%* | *°C* | 142 | 395 | 391 |
| *95%* | *°C* | 146 | 404 | 398 |
| *100%* | *°C* | 150 | 432 | 432 |

Les fractions liquides PI-150°C et 150°C+ présentent toutes les deux des compositions compatibles avec une unité de vapocraquage puisque :
- elles ne contiennent pas d'oléfines (mono- et di-oléfines) ;
- elles présentent des teneurs en élément chlore très faibles (respectivement une teneur non détectée et une teneur de 25 ppb poids) et inférieures à la limite requise pour une charge de vapocraqueur (≤ 50 ppb poids) ;
- les teneurs en métaux, en particulier en fer (Fe), sont elles aussi très faibles (teneurs en métaux non détectée pour la fraction PI-150°C et < 1 ppm poids pour la fraction 150°C+ ; teneurs en Fe non détectée pour la fraction PI-150°C et 50 ppb poids pour la fraction 150°C+) et inférieures aux limites requises pour une charge de vapocraqueur (≤ 5,0 ppm poids, de manière très préférée ≤ 1 ppm poids pour les métaux ; ≤ 100 ppb poids pour le Fe) ;
- enfin elles contiennent du soufre (< 2 ppm poids pour la fraction PI-150°C et < 10 ppm poids pour la fraction 150°C+) et de l'azote (< 0,5 ppm poids pour la fraction PI-150°C et < 5 ppm poids pour la fraction 150°C+) à des teneurs très inférieures aux limites requises pour une charge de vapocraqueur (≤ 500 ppm poids, de préférence ≤ 200 ppm poids pour S et N).

Il apparait également que le mélange des deux fractions liquide, nommé Pl+, présente également des teneurs très faibles en oléfines et en contaminants (en particulier en métaux, chlore, soufre, azote) rendant la composition compatible avec une unité de vapocraquage.

Les fractions liquides PI-150°C et 150°C+ obtenues sont donc ensuite envoyées vers une étape de vapocraquage où les fractions liquides sont craquée dans des conditions différentes (cf. tableau 7). Le mélange PI+ peut aussi être envoyé directement vers une étape de vapocraquage selon les conditions mentionnées dans le tableau 7.

**Tableau 7 : conditions de l'étape de vapocraquage**

| Pression sortie fours | MPa abs | 0,2 |
|---|---|---|
| Température sortie four fractions PI-150°C | °C | 800 |
| Température sortie four fraction 150°C+ | °C | 790 |
| Température sortie four fractions PI+ | °C | 795 |
| Ratio Vapeur / fractions PI-150°C+ | kg/kg | 0,6 |
| Ratio Vapeur / fraction 150°C+ | kg/kg | 0,8 |
| Ratio Vapeur / fractions PI+ | kg/kg | 0,7 |
| Temps de séjour four fractions PI-150°C | s | 0,3 |
| Temps de séjour four fractions 150°C+ | s | 0,3 |
| Temps de séjour four fractions PI+ | s | 0,3 |

Les effluents des différents fours de vapocraquage sont soumis à une étape de séparation permettant de recycler les composés saturés vers les fours de vapocraquage et d'obtenir les rendements présentés dans le tableau 8 (rendement = % de masse de produit par rapport à la masse de chacune des fractions en amont de l'étape de vapocraquage, noté % m/m).

**Tableau 8 : rendements de l'étape de vapocraquage**

| Fractions | | Fraction PI-150°C | Fraction 150°C+ | Fraction PI+ |
|---|---|---|---|---|
| H2, CO, C1 | % m/m | 7,8 | 7,9 | 8,1 |
| Ethylène | % m/m | 33,7 | 34,2 | 34,8 |
| Propylène | % m/m | 18,3 | 18,6 | 19,0 |
| Coupe C4 | % m/m | 14,6 | 14,8 | 15,1 |
| Essence de pyrolyse | % m/m | 19,8 | 19,4 | 18,8 |
| Huile de pyrolyse | % m/m | 5,7 | 5,1 | 4,2 |

En considérant les rendements obtenus pour les différentes fractions liquides PI-150°C et 150°C+ (et leur mélange PI+) lors du procédé de traitement de l'huile de pyrolyse (cf. tableau 5), il est possible de déterminer les rendements globaux des produits issus de l'étape de vapocraquage par rapport à la charge initiale de type huile de pyrolyse de plastiques introduite à l'étape a) :

**Tableau 9 : rendements globaux du procédé suivi de l'étape de vapocraquage**

| Fractions | | Fraction PI-150°C | Fraction 150°C+ | Fraction PI+ |
|---|---|---|---|---|
| H2, CO, C1 | % m/m | 2,2 | 5,6 | 8,0 |
| Ethylène | % m/m | 9,5 | 24,4 | 34,7 |
| Propylène | % m/m | 5,2 | 13,3 | 18,9 |
| Coupe C4 | % m/m | 4,1 | 10,6 | 15,1 |
| Essence de pyrolyse | % m/m | 5,6 | 13,9 | 18,7 |
| Huile de pyrolyse | % m/m | 1,6 | 3,6 | 4,2 |

Lorsque la fraction liquide PI+ est soumise à une étape de vapocraquage, le procédé selon l'invention permet d'atteindre des rendements massiques globaux en éthylène et en propylène respectivement de 34,7 % et 18,9 % par rapport à la quantité massique de charge de type huile de pyrolyse de plastiques initiale. Lorsque les fractions PI-150°C et 150°C+ sont envoyées à l'unité de vapocraquage séparément, le procédé selon l'invention permet d'atteindre des rendements massiques globaux en éthylène et en propylène respectivement de 33,9 % (= 9,5 + 24,4) et 18,5 % (= 5,2 + 13,3) par rapport à la quantité massique de charge de type huile de pyrolyse de plastiques initiale.

De plus, l'enchainement spécifique d'étapes en amont de l'étape de vapocraquage permet de limiter la formation de coke et d'éviter les problèmes de corrosion qui seraient apparus si le chlore n'avait pas été éliminé.

### Exemple 2 (conforme à l'invention)

Dans cet exemple, l'étape de fractionnement inclut en plus d'une colonne de stripage une section de distillation de manière à obtenir une coupe diesel pouvant être intégrée directement à un pool diesel, c'est-à-dire répondant aux spécifications demandées pour un diesel et en particulier la spécification du T90 D86 à 360°C.

La charge à traiter est identique à celle décrite dans l'Exemple 1 (cf. tableau 2).

Elle subit les étapes a) d'hydrogénation sélective, b) d'hydrotraitement et c) de séparation, opérées dans les mêmes conditions que celles décrites dans l'Exemple 1. L'effluent liquide obtenu à l'issue de l'étape c) de séparation est envoyée vers une colonne de stripage, comme dans l'Exemple 1. A l'issue de la colonne de stripage, les deux fractions PI-150°C et 150°C+ sont obtenues, comme dans l'Exemple 1. Elles ont les mêmes caractéristiques que celles de l'Exemple 1 (cf. tableau 6). La fraction 150°C+ est envoyée vers une colonne de distillation où elle est distillée en deux coupes : une coupe 150-385°C et une coupe 385°C+. Une partie de la coupe 385°C+ est récupérée pour constituer un flux de recyle R qui est envoyé vers l'étape b) d'hydrotraitement.

De manière similaire au procédé décrit dans l'Exemple 1, l'écart de température entre l'entrée et la sortie de la section réactionnelle d'hydrotraitement est limité par rapport à un procédé sans recycle.

Le tableau 10 donne les rendements globaux des différentes fractions obtenues à l'issue des étapes c) de séparation et d) de fractionnement (qui comprend une colonne de stripage et une colonne de distillation).

**Tableau 10 : rendements des différents produits obtenus après séparation et fractionnement**

| | | |
|---|---|---|
| NH₃ + H₂S | % m/m | 0,350 |
| Fraction C 1-C4 | % m/m | 0,50 |
| Fraction PI-150°C | % m/m | 28,10 |
| Fraction 150_385°C+ | % m/m | 60,90 |
| Fraction 385°C+ | % m/m | 14,63 |

Le tableau 11 donne les caractéristiques des coupes 150-385°C et 385°C+, et les spécifications commerciales EN-590 d'un diesel.

**Tableau 11 : caractéristiques des coupes 150-385°C et 385°C+ et spécifications commerciales EN-590**

| Caractéristiques | Unités | Coupe 150-385°C | Coupe 385°C+ | Spécifications EN-590 |
|---|---|---|---|---|
| Masse volumique @ 15°C | g/cm³ | 0,824 | 0,844 | 0,820 - 0,845 |
| Teneur en : | | | | |
| Soufre | ppm poids | < 10 | < 10 | < 10 |
| Azote | ppm poids | < 5 | < 5 | |
| Nombre de Cétane D613 | | 55,4 | - | > 51 |
| Il nd ice de Cétane D4737A | | 54,4 | - | > 46 |
| Aromatiques | % poids | 2 | 2 | < 11 |
| *Distillation Simulée D2887* | | | | |
| *0* | *°C* | 152 | 377 | |
| *5* | *°C* | 160 | 381 | |
| *10* | *°C* | 171 | 383 | |
| *30* | *°C* | 216 | 391 | |
| *50* | *°C* | 263 | 398 | |
| *70* | *°C* | 318 | 404 | |
| *90* | *°C* | 369 | 420 | |
| *95* | *°C* | 380 | 426 | |
| *100* | *°C* | 390 | 429 | |
| Distillation D86 | | | | |
| 0 | °*C* | 181 | 402 | |
| 5 | °*C* | 187 | 403 | |
| 10 | °*C* | 193 | 396 | |
| 30 | °*C* | 225 | 389 | |
| 50 | °*C* | 262 | 384 | |
| 70 | °*C* | 305 | 387 | |
| 90 | °*C* | 344 | 394 | |
| 95 | °*C* | 355 | 398 | < 360°C |
| 100 | °*C* | 358 | 395 | |

Le tableau 11 montre que la coupe 150-385°C a les qualités requises pour être envoyées directement au pool diesel.

### Exemple 3 (non conforme à l'invention)

Dans cet exemple, la charge hydrocarbonée de type huile de pyrolyse identique à celle utilisée dans l'exemple 1 est directement envoyée vers une étape de vapocraquage.

Les rendements massiques des différents produits obtenus sont calculés par rapport à la charge initiale (cf. Tableau 12)

**Tableau 12 : rendements de l'étape de vapocraquage**

| | | |
|---|---|---|
| H2, CO, C1 | % m/m | 7,7 |
| Ethylène | % m/m | 33,1 |
| Propylène | % m/m | 18,0 |
| Coupe C4 | % m/m | 14,4 |
| Essence de pyrolyse | % m/m | 20,3 |
| Huile de pyrolyse | % m/m | 6,5 |

Les rendements en éthylène et en propylène, obtenus après vapocraquage direct de l'huile de pyrolyse (procédé non conforme à l'invention) et présentés dans la tableau 12, sont inférieurs à ceux obtenus après vapocraquage d'une charge issue du traitement selon le procédé de l'invention de la même huile de pyrolyse de plastiques de l'Exemple 1 (cf. tableau 8), ce qui démontre l'intérêt du procédé selon l'invention. De plus, le traitement d'huile de pyrolyse directement dans un four de vapocraquage (Exemple 2) s'est traduit par une formation de coke accrue nécessitant un arrêt prématuré du four.

## Revendications

1. Procédé de traitement d'une charge comprenant une huile de pyrolyse de plastiques, comprenant :
a) une étape d'hydrogénation sélective mise en œuvre dans une section réactionnelle alimentée au moins par ladite charge maintenue en phase liquide et un flux gazeux comprenant de l'hydrogène, en présence d'au moins un catalyseur d'hydrogénation sélective, à une température entre 110 et 200°C, une pression partielle d'hydrogène entre 1,0 et 10,0 MPa abs. et une vitesse volumique horaire entre 1,0 et 10,0 h⁻¹, la quantité d'hydrogène du flux gazeux mis en œuvre à l'étape a) étant comprise entre 1 et 50 Nm³ d'hydrogène par m³ de charge, pour obtenir un effluent hydrogéné;
b) une étape d'hydrotraitement mise en œuvre dans une section réactionnelle d'hydrotraitement, mettant en œuvre un réacteur à lit fixe ayant n lits catalytiques, n étant un nombre entier supérieur ou égal à 1, comprenant chacun au moins un catalyseur d'hydrotraitement, ladite section réactionnelle d'hydrotraitement étant alimentée au moins par ledit effluent hydrogéné issu de l'étape a) et un flux gazeux comprenant de l'hydrogène, ledit effluent hydrogéné issu de l'étape a) et ledit flux gazeux comprenant de l'hydrogène étant introduits dans la section réactionnelle d'hydrotraitement au niveau du premier lit catalytique de ladite section, ladite section réactionnelle d'hydrotraitement étant mise en œuvre à une température entre 250 et 430°C, une pression partielle d'hydrogène entre 1,0 et 10,0 MPa abs. et une vitesse volumique horaire entre 0,1 et 10,0 h⁻¹, la quantité d'hydrogène du flux gazeux mis en œuvre à l'étape b) étant comprise entre 50 et 1000 Nm³ d'hydrogène par m³ de charge fraîche qui alimente l'étape a), pour obtenir un effluent d'hydrotraitement ;
c) une étape de séparation, alimentée par l'effluent d'hydrotraitement issu de l'étape b) et une solution aqueuse, ladite étape étant opérée à une température entre 200 et 300°C, ladite étape c) de séparation comprenant une injection d'une solution aqueuse dans l'effluent d'hydrotraitement issu de l'étape b), en amont de la section de lavage/séparation, pour obtenir au moins un effluent gazeux, un effluent aqueux et un effluent hydrocarboné ;
d) optionnellement une étape de fractionnement de tout ou partie de l'effluent hydrocarboné issu de l'étape c), pour obtenir au moins un flux gazeux et au moins un flux hydrocarboné ;
e) une étape de recyclage comprenant une phase de récupération d'une fraction de l'effluent hydrocarboné issu de l'étape c) de séparation ou une fraction du ou d'au moins un des flux hydrocarboné(s) issu(s) de l'étape d) optionnelle de fractionnement, pour constituer un flux de recycle et une phase de recyclage dudit flux de recycle vers au moins l'étape a) d'hydrogénation sélective, l'étape b) d'hydrotraitement ou les étapes a) et b).

2. Procédé selon la revendication 1, dans lequel la section réactionnelle d'hydrotraitement de l'étape b) est en outre alimentée par au moins une fraction du flux de recycle issue de l'étape e) qui est(sont) introduite(s) dans ladite section réactionnelle d'hydrotraitement en mélange avec l'effluent hydrogéné issu de l'étape a), séparément dudit effluent hydrogéné issu de l'étape a) ou selon les deux modes en mélange et séparément dudit effluent hydrogéné.

3. Procédé selon la revendication 1 ou 2, dans lequel la section réactionnelle de l'étape a) est en outre alimentée par au moins une fraction du flux de recycle issu de l'étape e) soit en mélange avec ladite charge soit séparément de la charge, soit encore selon les deux modes en mélange et séparément de la charge.

4. Procédé selon l'une des revendications précédentes comprenant ladite étape d) de fractionnement.

5. Procédé selon l'une des revendications précédentes, comprenant une étape a0) de prétraitement de la charge comprenant une huile de pyrolyse de plastiques, ladite étape de prétraitement étant mise en œuvre préalablement à l'étape a) d'hydrogénation sélective dans une section d'adsorption, opérée en présence d'au moins un adsorbant et/ou dans une section de séparation solide/liquide, ladite étape de prétraitement étant alimentée par ladite charge et fonctionnant à une température entre 0 et 150°C, de préférence entre 5 et 100°C, et à une pression entre 0,15 et 10,0 MPa abs., de préférence entre 0,2 et 1,0 MPa abs., pour obtenir une charge prétraitée qui alimente l'étape a).

6. Procédé selon l'une des revendications précédentes dans lequel l'étape a) d'hydrogénation sélective est réalisée à une température entre 130 et 180°C.

7. Procédé selon l'une des revendications précédentes dans lequel la quantité d'hydrogène du flux gazeux mis en œuvre à l'étape a) est comprise entre 5 et 20 Nm³ d'hydrogène par m³ de charge.

8. Procédé selon l'une des revendications précédentes dans lequel la section réactionnelle de l'étape a) met en œuvre aux moins deux réacteurs de préférence fonctionnant en mode permutable.

9. Procédé selon l'une des revendications précédentes dans lequel ledit au moins catalyseur d'hydrogénation sélective comprend un support, de préférence choisi dans le groupe constitué par l'alumine, la silice, les silices-alumines, la magnésie, les argiles et leurs mélanges, et une fonction hydro-déshydrogénante comprenant au moins un élément du groupe VIII, de préférence choisi dans le groupe constitué par le nickel et le cobalt, et/ou au moins un élément du groupe VIB, de préférence choisi dans le groupe constitué par le molybdène et le tungstène.

10. Procédé selon la revendication 9 dans lequel ledit au moins catalyseur d'hydrogénation sélective comprend moins de 1% en poids de nickel, exprimé en oxyde de nickel NiO par rapport au poids dudit catalyseur, et moins de 5% en poids de molybdène, exprimé en oxyde de molybdène MoO3 par rapport au poids dudit catalyseur, sur un support d'alumine.

11. Procédé selon l'une des revendications précédentes, dans lequel n est compris entre 2 et 10, et un flux gazeux supplémentaire comprenant de l'hydrogène est introduit en entrée de chaque lit catalytique à partir du second lit catalytique, de la section réactionnelle d'hydrotraitement de l'étape b).

12. Procédé selon l'une des revendications précédentes dans lequel la quantité d'hydrogène du flux gazeux mis en œuvre à l'étape b) comprise entre 100 et 300 Nm³ d'hydrogène par m³ de charge fraîche qui alimente l'étape a).

13. Procédé selon l'une des revendications précédentes dans lequel ledit au moins un catalyseur d'hydrotraitement comprend un support, de préférence choisi dans le groupe constitué par l'alumine, la silice, les silices-alumines, la magnésie, les argiles et leurs mélanges, et une fonction hydro-déshydrogénante comprenant au moins un élément du groupe VIII, de préférence choisi dans le groupe constitué par le nickel et le cobalt, et/ou au moins un élément du groupe VIB, de préférence choisi dans le groupe constitué par le molybdène et le tungstène.

14. Procédé selon l'une des revendications précédentes dans lequel ledit au moins un catalyseur d'hydrotraitement présente une surface spécifique supérieure ou égale à 250 m²/g, de préférence supérieure ou égale à 300 m²/g.

15. Procédé selon l'une des revendications précédentes, comprenant en outre une étape f) de vapocraquage, réalisée dans au moins un four de pyrolyse à une température comprise entre 700 et 900°C et à une pression comprise entre 0,05 et 0,3 MPa relatif.

## Patentansprüche

1. Verfahren zur Behandlung einer Charge, die ein Pyrolyseöl aus Kunststoffen umfasst, wobei es Folgendes umfasst:
a) einen Schritt des selektiven Hydrierens, wobei dieser in einem Reaktionsabschnitt, dem zumindest die Charge, welche in Flüssigphase gehalten wird, und ein Wasserstoff umfassender Gasstrom in Gegenwart mindestens eines Katalysators zur selektiven Hydrierung zugeführt werden, bei einer Temperatur zwischen 110 und 200 °C, einem Wasserstoffpartialdruck zwischen 1,0 und 10,0 MPa abs. und einer Raumgeschwindigkeit zwischen 1,0 und 10,0 h⁻¹, durchgeführt wird, wobei die Menge an Wasserstoff des Gasstroms, welches im Schritt a) eingesetzt wird, im Bereich von 1 bis 50 Nm³ an Wasserstoff pro m³ an Charge liegt, um einen hydrierten ausgangsseitigen Stoffstrom zu erhalten;
b) einen Schritt des Hydrobehandelns, der in einem Reaktionsabschnitt zur Hydrobehandlung durchgeführt wird, wobei ein Festbettreaktor mit n katalytischen Betten zum Einsatz kommt, wobei n eine ganze Zahl von mindestens 1 ist und jedes davon mindestens einen Hydrobehandlungskatalysator umfasst, wobei dem Reaktionsabschnitt zur Hydrobehandlung zumindest der hydrierte ausgangsseitige Stoffstrom aus dem Schritt a) und ein Wasserstoff umfassender Gasstrom zugeführt werden, wobei der hydrierte ausgangsseitige Stoffstrom aus dem Schritt a) und der Wasserstoff umfassende Gasstrom im Bereich des ersten katalytischen Betts des Reaktionsabschnitts zur Hydrobehandlung in diesen Abschnitt eingeleitet werden, wobei der Reaktionsabschnitt zur Hydrobehandlung bei einer Temperatur zwischen 250 und 430 °C, einem Wasserstoffpartialdruck zwischen 1,0 und 10,0 MPa abs. und einer Raumgeschwindigkeit zwischen 0,1 und 10,0 h⁻¹ betrieben wird, wobei die Menge an Wasserstoff des Gasstroms, welcher im Schritt b) eingesetzt wird, im Bereich von 50 bis 1000 Nm³ an Wasserstoff pro m³ an frischer Charge liegt, welche dem Schritt a) zugeführt wird, um einen ausgangsseitigen Hydrobehandlungsstoffstrom zu erhalten;
c) einen Schritt des Trennens, dem der ausgangsseitige Hydrobehandlungsstoffstrom aus dem Schritt b) und eine wässrige Lösung zugeführt werden, wobei dieser Schritt bei einer Temperatur zwischen 200 und 300 °C betrieben wird, wobei im Rahmen des Trennschritts c) eine wässrige Lösung stromaufwärts des Wasch-/Trennabschnitts in den ausgangsseitigen Hydrobehandlungsstoffstrom aus dem Schritt b) eingeleitet wird, um zumindest einen ausgangsseitigen Gasstrom, einen ausgangsseitigen wässrigen Strom und einen ausgangsseitigen kohlenwasserstoffartigen Strom zu erhalten;
d) gegebenenfalls einen Schritt des Fraktionierens der Gesamtheit oder eines Teils des ausgangsseitigen kohlenwasserstoffartigen Stoffstroms aus dem Schritt c) um mindestens einen Gasstrom und mindestens einen Kohlenwasserstoffstrom zu erhalten;
e) einen Schritt des Rückführens, der eine Phase, in welcher eine Fraktion des ausgangsseitigen kohlenwasserstoffartigen Stroms aus dem Trennschritt c) oder eine Fraktion des oder mindestens eines Kohlenstoffstroms aus dem gegebenenfalls durchgeführte Fraktionierungsschritt d) aufgefangen wird, um einen Rückführungsstrom darzustellen, sowie eine Phase umfasst, in welcher der Rückführungsstrom wieder zum Schritt a) des selektiven Hydrierens, zum Schritt b) des Hydrobehandeln oder zu den Schritten a) und b) zurückgeführt wird.

2. Verfahren nach Anspruch 1, wobei dem Reaktionsabschnitt zur Hydrobehandlung des Schrittes b) darüber hinaus mindestens eine Fraktion des Rückführungsstroms aus dem Schritt e) zugeführt wird/werden, wobei diese in Mischung mit dem hydrierten ausgangsseitigen Stoffstrom aus dem Schritt a), getrennt von dem hydrierten ausgangsseitigen Stoffstrom aus dem Schritt a) oder gemäß den beiden Vorgehensweisen, nämlich in Mischung und getrennt von dem hydrierten ausgangsseitigen Stoffstrom, in den Reaktionsabschnitt zur Hydrobehandlung eingeleitet wird/werden.

3. Verfahren nach Anspruch 1 oder 2, wobei dem Reaktionsabschnitt des Schrittes a) darüber hinaus mindestens eine Fraktion des Rückführungsstroms aus dem Schritt e) entweder in Mischung mit der Charge oder getrennt von der Charge oder aber gemäß den beiden Vorgehensweise, nämlich in Mischung und getrennt von der Charge, zugeführt wird.

4. Verfahren nach einem der vorhergehenden Ansprüche, wobei es den Schritt d) des Fraktionierens umfasst.

5. Verfahren nach einem der vorhergehenden Ansprüche, wobei es einen Schritt a0) des Vorbehandelns der Charge umfasst, welche ein Pyrolyseöl aus Kunststoffen umfasst, wobei der Vorbehandlungsschritt im Vorfeld des Schrittes a) des selektiven Hydrierens in einem Adsorptionsabschnitt durchgeführt wird, welcher in Gegenwart mindestens eines Adsorptionsmittels und/oder in einem Abschnitt zur Feststoff/Feststoff-Trennung betrieben wird, wobei dem Vorbehandlungsschritt die Charge zugeführt wird und dieser bei einer Temperatur zwischen 0 und 150 °C, vorzugsweise zwischen 5 und 100 °C, und bei einem Druck zwischen 0,15 und 10,0 MPa abs., vorzugsweise zwischen 0,2 und 1,0 MPa abs. betrieben wird, um eine vorbehandelte Charge zu erhalten, welche dem Schritt a) zugeführt wird.

6. Verfahren nach einem der vorhergehenden Ansprüche, wobei der Schritt a) des selektiven Hydrierens bei einer Temperatur zwischen 130 und 180 °C durchführt wird.

7. Verfahren nach einem der vorhergehenden Ansprüche, wobei die Menge an Wasserstoff des Gasstroms, welcher im Schritt a) eingesetzt wird, im Bereich von 5 bis 20 Nm³ an Wasserstoff pro m³ an Charge liegt.

8. Verfahren nach einem der vorhergehenden Ansprüche, wobei im Reaktionsabschnitt des Schrittes a) mindestens zwei Reaktoren zum Einsatz kommen, die vorzugsweise derart betrieben werden, dass sie permutiert werden können.

9. Verfahren nach einem der vorhergehenden Ansprüche, wobei der mindestens Katalysator zur selektiven Hydrierung einen Träger, der vorzugsweise aus der Gruppe ausgewählt ist, welche aus Aluminiumoxid, Siliciumdioxid, Siliciumdioxid-Aluminiumoxiden, Magnesiumoxid, Tonsorten und deren Mischungen besteht, und eine hydrierende/dehydrierende Funktion umfasst, die mindestens ein Element der Gruppe VIII, welches vorzugsweise aus Nickel und Kobalt ausgewählt ist, und/oder mindestens ein Element der Gruppe VIB umfasst, welches vorzugweise aus der Gruppe ausgewählt ist, welche aus Molybdän und Wolfram besteht.

10. Verfahren nach Anspruch 9, wobei der mindestens Katalysator zur selektiven Hydrierung weniger als 1 Gewichts-% an Nickel, ausgedrückt als Nickeloxid NiO unter Bezugnahme auf das Gewichts des Katalysators, und weniger als 5 Gewichts-% an Molybdän, ausgedrückt als Molybdänoxid MoO3 unter Bezugnahme auf dem Gewichts des Katalysators, auf einem Träger aus Aluminiumoxid umfasst.

11. Verfahren nach einem der vorhergehenden Ansprüche, wobei n im Bereich von 2 bis 10 liegt, und ein zusätzlicher Gasstrom, der Wasserstoff umfasst, ab dem zweiten Katalysatorbett des Reaktionsabschnitts zur Hydrobehandlung des Schrittes b) eingangsseitig jedes der Katalysatorbetten eingeleitet wird.

12. Verfahren nach einem der vorhergehenden Ansprüche, wobei die Menge an Wasserstoff des Gasstroms, welcher im Schritt b) eingesetzt wird, zwischen 100 und 300 Nm³ an Wasserstoff pro m³ an frischer Charge, welche dem Schritt a) zugeführt wird.

13. Verfahren nach einem der vorhergehenden Ansprüche, wobei der mindestens eine Hydrobehandlungskatalysator einen Träger, der vorzugsweise aus der Gruppe ausgewählt ist, welche aus Aluminiumoxid, Siliciumdioxid, Siliciumdioxid-Aluminiumoxiden, Magnesiumoxid, Tonsorten und deren Mischungen besteht, und eine hydrierende/dehydrierende Funktion umfasst, die mindestens ein Element der Gruppe VIII, welches vorzugsweise aus Nickel und Kobalt ausgewählt ist, und/oder mindestens ein Element der Gruppe VIB umfasst, welches vorzugweise aus der Gruppe ausgewählt ist, welche aus Molybdän und Wolfram besteht.

14. Verfahren nach einem der vorhergehenden Ansprüche, wobei der mindestens eine Hydrobehandlungskatalysator eine spezifische Oberfläche von mindestens 250 m²/g, vorzugsweise von mindestens 300 m²/g aufweist.

15. Verfahren nach einem der vorhergehenden Ansprüche, wobei es darüber hinaus einen Schritt f) des Dampfcrackens umfasst, der in mindestens einem Pyrolyseofen bei einer Temperatur im Bereich von 700 bis 900 °C und bei einem Relativdruck im Bereich von 0,05 bis 0,3 MPa durchgeführt wird.

## Claims

1. Process for the treatment of a feedstock comprising a plastics pyrolysis oil, comprising:
a) a stage of selective hydrogenation carried out in a reaction section fed at least with said feedstock maintained in the liquid phase and a gas stream comprising hydrogen, in the presence of at least one selective hydrogenation catalyst, at a temperature between 110 and 200°C, a hydrogen partial pressure between 1.0 and 10.0 MPa abs. and an hourly space velocity between 1.0 and 10.0 h⁻¹, the amount of hydrogen of the gas stream employed in stage a) being of between 1 and 50 Nm³ of hydrogen per m³ of feedstock, to obtain a hydrogenated effluent;
b) a hydrotreating stage carried out in a hydrotreating reaction section, employing a fixed-bed reactor having n catalytic beds, n being an integer greater than or equal to 1, each comprising at least one hydrotreating catalyst, said hydrotreating reaction section being fed at least with said hydrogenated effluent resulting from stage a) and a gas stream comprising hydrogen, said hydrogenated effluent resulting from stage a) and said gas stream comprising hydrogen being introduced into the hydrotreating reaction section at the level of the first catalytic bed of said section, said hydrotreating reaction section being used at a temperature between 250 and 430°C, a hydrogen partial pressure between 1.0 and 10.0 MPa abs. and an hourly space velocity between 0.1 and 10.0 h⁻¹, the amount of hydrogen of the gas stream employed in stage b) being of between 50 and 1000 Nm³ of hydrogen per m³ of fresh feedstock which feeds stage a), to obtain a hydrotreating effluent;
c) a separation stage, fed with the hydrotreating effluent resulting from stage b) and an aqueous solution, said stage being operated at a temperature between 200 and 300°C, said separation stage c) comprising an injection of an aqueous solution into the hydrotreating effluent resulting from stage b), upstream of the washing/separation section, to obtain at least one gaseous effluent, an aqueous effluent and a hydrocarbon effluent;
d) optionally a stage of fractionating all or part of the hydrocarbon effluent resulting from stage c), to obtain at least one gas stream and at least one hydrocarbon stream;
e) a recycling stage comprising a phase of recovery of a fraction of the hydrocarbon effluent resulting from the separation stage c) or a fraction of the or of at least one of the hydrocarbon stream(s) resulting from the optional fractionation stage d), to constitute a recycle stream, and a phase of recycling said recycle stream to at least the selective hydrogenation stage a), the hydrotreating stage b) or stages a) and b).

2. Process according to Claim 1, in which the hydrotreating reaction section of stage b) is additionally fed with at least one fraction of the recycle stream resulting from stage e) which is (are) introduced into said hydrotreating reaction section as a mixture with the hydrogenated effluent resulting from stage a), separately from said hydrogenated effluent resulting from stage a) or according to the two modes as a mixture and separately from said hydrogenated effluent.

3. Process according to Claim 1 or 2, in which the reaction section of stage a) is additionally fed with at least one fraction of the recycle stream resulting from stage e), either as a mixture with said feedstock or separately from the feedstock, or also according to the two modes as a mixture and separately from the feedstock.

4. Process according to one of the preceding claims, comprising said fractionation stage d).

5. Process according to one of the preceding claims, comprising a stage a0) of pretreatment of the feedstock comprising a plastics pyrolysis oil, said pretreatment stage being carried out prior to the selective hydrogenation stage a) in an adsorption section, operated in the presence of at least one adsorbent, and/or in a solid/liquid separation section, said pretreatment stage being fed with said feedstock and operating at a temperature between 0 and 150°C, preferably between 5 and 100°C, and at a pressure between 0.15 and 10.0 MPa abs., preferably between 0.2 and 1.0 MPa abs., to obtain a pretreated feedstock which feeds stage a).

6. Process according to one of the preceding claims, in which the selective hydrogenation stage a) is carried out at a temperature between 130 and 180°C.

7. Process according to one of the preceding claims, in which the amount of hydrogen of the gas stream employed in stage a) is of between 5 and 20 Nm³ of hydrogen per m³ of feedstock.

8. Process according to one of the preceding claims, in which the reaction section of stage a) employs at least two reactors preferably operating in permutable mode.

9. Process according to one of the preceding claims, in which said at least selective hydrogenation catalyst comprises a support, preferably chosen from the group consisting of alumina, silica, silica-aluminas, magnesia, clays and their mixtures, and a hydrodehydrogenating function comprising at least one element from group VIII, preferably chosen from the group consisting of nickel and cobalt, and/or at least one element from group VIB, preferably chosen from the group consisting of molybdenum and tungsten.

10. Process according to Claim 9, in which said at least selective hydrogenation catalyst comprises less than 1% by weight of nickel, expressed as nickel oxide NiO with respect to the weight of said catalyst, and less than 5% by weight of molybdenum, expressed as molybdenum oxide MoO₃ with respect to the weight of said catalyst, on an alumina support.

11. Process according to one of the preceding claims, in which n is between 2 and 10, and an additional gas stream comprising hydrogen is introduced into the inlet of each catalytic bed starting from the second catalytic bed of the hydrotreating reaction section of stage b).

12. Process according to one of the preceding claims, in which the amount of hydrogen of the gas stream employed in stage b) between 100 and 300 Nm³ of hydrogen per m³ of fresh feedstock which feeds stage a).

13. Process according to one of the preceding claims, in which said at least one hydrotreating catalyst comprises a support, preferably chosen from the group consisting of alumina, silica, silica-aluminas, magnesia, clays and their mixtures, and a hydrodehydrogenating function comprising at least one element from group VIII, preferably chosen from the group consisting of nickel and cobalt, and/or at least one element from group VIB, preferably chosen from the group consisting of molybdenum and tungsten.

14. Process according to one of the preceding claims, in which said at least one hydrotreating catalyst exhibits a specific surface of greater than or equal to 250 m²/g, preferably of greater than or equal to 300 m²/g.

15. Process according to one of the preceding claims, additionally comprising a steam cracking stage f), carried out in at least one pyrolysis furnace at a temperature of between 700 and 900°C and at a pressure of between 0.05 and 0.3 MPa relative.
